# EUROPEAN PATENT APPLICATION

(11) **EP 4 535 916 A1**
(43) Date of publication of application: **09.04.2025**
(21) Application number: 23834693.6
(22) Date of filing: 28.06.2023
(51) Int. Cl.: H04W 76/10

(54) **COMMUNICATION METHOD AND APPARATUS**

(30) Priority: 08.07.2022 CN 202210815549
(71) Applicant: Huawei Technologies Co., Ltd., Shenzhen, Guangdong 518129 (CN)
(72) Inventor: QUAN, Chao, Shenzhen, Guangdong 518129 (CN); WANG, Jian, Shenzhen, Guangdong 518129 (CN); CHENG, Xingqing, Shenzhen, Guangdong 518129 (CN)
(74) Representative: Huawei European IPR
(86) International application number: PCT/CN2023/103468
(87) International publication number: WO 2024/007925

(57) **Abstract**

This application provides a communication method and apparatus, and relates to the field of communication technologies. In the method, a first node may receive a plurality of pieces of first information from a plurality of second nodes, where each of the plurality of pieces of first information indicates a service type of a set to which a second node that sends the first information belongs. The first node may determine a target set from sets to which the plurality of second nodes belong, and send a connection request to a third node in the target set, where a service type of the target set corresponds to a first service of the first node. Further, the third node may establish a connection to the first node, and send information about the target set to the first node. In this way, the first node may perceive service types of the sets to which the plurality of second nodes belong, to select the proper target set to perform a service. In addition, the first node obtains the information about the target set by establishing the connection to the third node, thereby effectively improving efficiency of obtaining the information about the target set by the first node.

## Description

### CROSS-REFERENCE TO RELATED APPLICATIONS

This application claims priority to Chinese Patent Application No. 202210815549.0, filed with the China National Intellectual Property Administration on July 8, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus, which may be applied to fields such as intelligent driving, smart home, and intelligent manufacturing.

### BACKGROUND

In a short-range communication system, a plurality of independent devices that are used to cooperatively implement one or more services are generally defined as a communication set, so that a set user in the short-range communication system discovers, accesses, and manages these devices together. Operating statuses and behaviors of different devices in a same communication set are consistent. For example, a home theater system includes a large screen and a plurality of sound boxes, and the plurality of sound boxes form a communication set. The large screen is an audio source device, and may generate audio data, and the large screen may send the audio data to the plurality of sound boxes as a set user. The plurality of sound boxes receive and play the audio data, but each sound box in the plurality of sound boxes plays an audio corresponding to a different channel of the audio data, and states (for example, play/pause states) of playing the audio data by the plurality of sound boxes are consistent, and behaviors (for example, increasing/decreasing volume) of the plurality of sound boxes are consistent.

However, in a current technical solution, a set user cannot perceive a service supported by a member device in a communication set, and consequently efficiency of discovering and accessing, by the set user, the member device in the communication set is low. Therefore, how to optimize discovery and access of the set user to the member in the communication set, to improve efficiency of communication between a plurality of nodes is a technical problem that needs to be urgently resolved.

### SUMMARY

Embodiments of this application provide a communication method and apparatus, to optimize discovery and access of a set user in a short-range communication system to a member in a communication set, and optimize a procedure of forming the communication set.

According to a first aspect, a communication method is provided, where the method is applicable to a scenario in which a set user discovers and accesses a member in a fixed set, and the method may be applied to a first node. The method includes: receiving a plurality of pieces of first information from a plurality of second nodes, where each of the plurality of pieces of first information indicates a service type of a set to which a second node that sends the first information belongs; determining a target set from sets to which the plurality of second nodes belong, where a service type of the target set corresponds to a first service of the first node; sending a connection request, where the connection request is used to request to establish a connection to a third node, and the third node belongs to the target set; and receiving information about the target set from the third node.

In some embodiments, the service type may also be referred to as a traffic type, and the first service may also be referred to as a first traffic.

It may be understood that the foregoing communication method is applicable to a scenario in which a plurality of second nodes have formed a fixed set. Different nodes in the plurality of second nodes may belong to a same fixed set or different fixed sets. For example, the plurality of second nodes include a node A and a node B, and both the node A and the node B are member nodes in a set 1. For another example, the plurality of second nodes include a node A and a node B, the node A is a member node in a set 1, and the node B is a member node in a set 2. For still another example, the plurality of second nodes include a node A, a node B, and a node C, the node A and the node B are member nodes in a set 1, and the node C is a member node in a set 2.

In this embodiment of this application, the service type of the target set is a service type supported by a member node in the target set. Correspondingly, "a service type of the target set corresponds to a first service of the first node" may be understood as that the member node in the target set may be configured to support the first service of the first node.

In the method in this embodiment of this application, the first information sent by the plurality of second nodes (that is, the member nodes in the fixed set) may indicate the service types of the sets to which the second nodes that send the first information belong. Therefore, after receiving the first information, the first node (that is, the set user) may perceive the service types of the sets to which the plurality of second nodes belong, so that the first node determines the proper target set to perform the first service of the first node. In addition, the first node may obtain the information about the target set by establishing the connection to the third node. Compared with a conventional-technology technical solution in which a first node obtains information about a target set by establishing connections to all member nodes in the target set, this solution can effectively improve efficiency of obtaining the information about the target set by the first node, and effectively reduce communication overheads.

In a possible design, the first information may further indicate a set identifier of the set to which the second node that sends the first information belongs, and the set identifier is determined based on a set key of the set to which the second node belongs.

In a possible design, the first node may further send read information to the third node, where the read information is used to request the information about the target set. In this design, the first node may read the information about the target set from the third node by sending the read information to the third node. This effectively simplifies a procedure in which the first node obtains the information about the target set, thereby improving efficiency of obtaining the information about the target set by the first node.

In a possible design, the information about the target set includes one or more of the following: behavior information of a set user of the target set, behavior information of a member node in the target set, the service type of the target set, a quantity of member nodes in the target set, or a set key of the target set. The behavior information of the set user indicates a behavior of the set user in receiving/sending broadcast information; and the behavior information of the member node in the target set indicates a behavior of the member node in the target set in receiving/sending broadcast information.

It should be noted that after the first node (that is, the set user) obtains the information about the target set, there are a plurality of manners in which the first node establishes a connection to a fourth node (that is, a node that is in the target set and that is different from the third node) in the target set, including but not limited to the following manners:
Manner 1: The first node may further send second information, where the second information includes a first identifier, and the first identifier is determined based on the set key of the target set; and receive a connection request from the fourth node, and establish the connection to the fourth node.
   In Manner 1, the first node (that is, the set user) sends the second information (that is, directed connection invitation broadcast) to invite the member node in the target set to establish a connection to the first node. In this way, efficiency of accessing the first node by the member node in the target set can be effectively improved. In addition, the second information carries the first identifier determined based on the set key of the target set, so that privacy of the fourth node (that is, the member node in the target set) can be protected.
Manner 2: The first node may further receive third information of the fourth node, where the third information includes a first identifier; further the first node may verify identity information of the fourth node based on the first identifier; and when the verification succeeds, the first node sends a connection request to the fourth node, where the connection request is used to request to establish the connection to the fourth node.

In Manner 2, the fourth node (that is, the member node in the target set) actively initiates an access procedure, and when the first node successfully verifies the identity information of the fourth node, the first node establishes the connection to the fourth node, so that power consumption and signaling overheads of the first node can be effectively reduced. In addition, the third information carries the first identifier determined based on the set key of the target set, so that privacy of the fourth node (that is, the member node in the target set) can be protected.

In this embodiment of this application, "the first node verifies identity information of the fourth node based on the first identifier" may be understood as that the first node determines, based on the first identifier, whether the fourth node belongs to the target set.

In a possible design, that the first node verifies identity information of the fourth node based on the first identifier includes: verifying the first identifier based on the set key of the target set. If the first node successfully verifies the first identifier based on the set key of the target set, the first node determines that the fourth node belongs to the target set; or if the first node fails to verify the first identifier based on the set key, the first node determines that the fourth node does not belong to the target set. In this design, the first node verifies the first identifier based on the set key, to determine whether the fourth node belongs to the target set, so that accuracy of verifying the identity information of the fourth node by the first node can be effectively improved.

According to a second aspect, a communication method is provided, where the method may be applied to a third node, and the third node belongs to a target set. The method includes: receiving a connection request from a first node, and establishing a connection to the first node; and sending information about the target set to the first node.

In a possible design, that the third node sends information about the target set to the first node includes: receiving read information from the first node, where the read information is used to request the information about the target set; and sending the information about the target set to the first node.

For a specific description of the information about the target set, refer to the related description in the first aspect.

In a possible design, before receiving the connection request from the first node, the third node may further send first information, where the first information indicates a service type of the set to which the third node belongs.

In a possible design, the first information further indicates a set identifier of the set to which the third node belongs, and the set identifier is determined based on a set key of the set to which the third node belongs.

For corresponding beneficial effect in the second aspect and any possible design of the second aspect, refer to the descriptions in the first aspect. Details are not described herein again.

According to a third aspect, a communication method is provided, and is applied to a fourth node (that is, a node that is in a target set and that is different from a third node). The method includes: receiving second information from a first node, where the second information includes a first identifier; verifying the first identifier based on a set key of a set to which the fourth node belongs; and when the verification succeeds, sending a connection request to the first node, where the connection request is used to request to establish a connection to the first node.

It may be understood that the fourth node verifies the first identifier based on the set key of the set to which the fourth node belongs. If the first identifier is successfully verified, the fourth node determines that the set to which the fourth node belongs is the target set; or if the first identifier fails to be verified, the fourth node determines that the set to which the fourth node belongs is not the target set.

For corresponding beneficial effect in the third aspect and any possible design of the third aspect, refer to the descriptions in the first aspect. Details are not described herein again.

According to a fourth aspect, a communication method is provided, and is applied to a fourth node (that is, a node that is in a target set and that is different from a third node). The method includes: sending third information, where the third information includes a first identifier, and the first identifier is determined based on a set key of a set to which the fourth node belongs; and receiving a connection request from a first node, and establishing a connection to the first node.

For corresponding beneficial effect in the fourth aspect and any possible design of the fourth aspect, refer to the descriptions in the first aspect. Details are not described herein again.

According to a fifth aspect, a communication method is provided, where the method is applicable to a scenario in which a set user discovers and accesses a member in a fixed set, and the method may be applied to a first node. The method includes: obtaining information about a target set by using an out-of-band (out of band, OOB) channel technology, where the information about the target set includes a service type and a set key of the target set, and the service type corresponds to a first service of the first node; and sending first information, where the first information includes a first identifier, and the first identifier is determined based on the set key of the target set.

In the method in this embodiment of this application, the first node may directly obtain the information about the target set by using the OOB, and does not need to establish a connection to a member node in the target set, thereby effectively improving efficiency of obtaining the information about the target set by the first node.

In a possible design, the OOB may include but is not limited to any one of the following: barcode scanning, two-dimensional code scanning, or near field communication (near field communication, NFC).

It should be noted that after the first node (that is, the set user) obtains the information about the target set, there are a plurality of manners in which the first node establishes a connection to at least one third node (that is, the member node in the target set) in the target set, including but not limited to the following manners:
Manner 1: The first node receives a connection request from the at least one third node, and establishes the connection to the at least one third node.
   In Manner 1, after sending the first information, the first node receives the connection request from the at least one third node, and establishes the connection to the at least one third node. This can effectively simplify an access procedure between the first node and the at least one third node (that is, the member node in the target set).
Manner 2: The first node may further receive second information from the at least one third node, where the second information includes the first identifier; then the first node verifies identity information of the at least one third node based on the first identifier; and when the verification succeeds, the first node sends the connection request to the at least one third node, where the connection request is used to request to establish the connection to the at least one third node.

In Manner 2, the at least one third node (that is, the member node in the target set) actively initiates an access procedure, and when the first node successfully verifies the identity information of the at least one third node, the first node establishes the connection to the at least one third node, so that power consumption of the first node can be effectively reduced. In addition, the second information carries the first identifier generated based on the set key of the target set, so that privacy of the at least one third node (that is, the member node in the target set) can be protected.

In a possible design, that the first node verifies identity information of the at least one third node based on the first identifier includes: verifying the first identifier based on the set key of the target set.

In this embodiment of this application, "the first node verifies identity information of the at least one third node based on the first identifier" may be understood as that the first node determines, based on the first identifier, whether the at least one third node belongs to the target set.

In a possible design, that the first node verifies identity information of the at least one third node based on the first identifier includes: verifying the first identifier based on the set key of the target set. If the first node successfully verifies the first identifier based on the set key of the target set, the first node determines that the at least one third node belongs to the target set; or if the first node fails to verify the first identifier based on the set key, the first node determines that the at least one third node does not belong to the target set. In this design, the first node verifies the first identifier based on the set key, to determine whether the at least one third node belongs to the target set, so that accuracy of verifying the identity information of the at least one third node by the first node can be effectively improved.

According to a sixth aspect, a communication method is provided, and is applied to a third node (that is, a member node in a target set). The method includes: receiving first information from a first node, where the first information includes a first identifier; verifying the first identifier based on a set key of the set to which the third node belongs; and when the verification succeeds, sending a connection request to the first node, where the connection request is used to request to establish a connection to the first node.

It may be understood that the third node verifies the first identifier based on the set key of the set to which the third node belongs. If the first identifier is successfully verified, the third node determines that the set to which the third node belongs is the target set; or if the first identifier fails to be verified, the third node determines that the set to which the third node belongs is not the target set.

For corresponding beneficial effect in the sixth aspect and any possible design of the sixth aspect, refer to the descriptions in the fifth aspect. Details are not described herein again.

According to a seventh aspect, a communication method is provided, and is applied to a third node (that is, a member node in a target set). The method includes: sending second information, where the second information includes a first identifier, and the first identifier is determined based on a set key of the set to which the third node belongs; and receiving a connection request from a first node, and establishing a connection to the first node.

For corresponding beneficial effect in the seventh aspect and any possible design of the seventh aspect, refer to the descriptions in the fifth aspect. Details are not described herein again.

According to an eighth aspect, a communication method is provided, where the method is applicable to a scenario in which a set user discovers and accesses a member in a fixed set, and the method may be applied to a first node. The method includes: sending first information, where the first information indicates a first service type, and the first service type corresponds to a first service of the first node; receiving a plurality of connection requests from a plurality of second nodes; establishing a plurality of connections to the plurality of second nodes; receiving set information of at least one first set, where the at least one set includes sets to which the plurality of second nodes belong respectively; and determining a target set from the at least one first set, where a service type of the target set corresponds to the first service.

In the method in this embodiment of this application, the first node sends the first information that carries the first service type (that is, set connection invitation broadcast); then the plurality of second nodes (that is, the member nodes in the fixed set) receive the first information, and when determining that service types of the sets to which the second nodes belong are the same as the first service type, send connection requests to the first node; and then the first node may establish the connections to the plurality of second nodes, receive the set information of the at least one first set, and determine the target set in the at least one first set. In this way, efficiency of determining the target set by the first node can be effectively improved.

In a possible design, the first node may further send read information to the plurality of second nodes, where the read information is used to request the set information of the at least one first set. In this design, the first node sends the read information to the plurality of second nodes, so that the plurality of second nodes may send, to the first node, the set information of the sets to which the plurality of second nodes belong, thereby effectively simplifying a procedure in which the first node obtains the set information of the at least one first set.

It should be noted that after determining the target set, the first node needs to search the plurality of second nodes for the member node in the target set, and the member node in the target set includes at least one third node.

In a possible design, the set information includes a quantity of member nodes in the set and a set key of the set; and the maintaining a connection between at least one third node and the first node based on a quantity of member nodes in the target set and a set key of the target set includes: maintaining the connection between the at least one third node and the first node when the set key of the target set is the same as a set key of a set to which the at least one third node belongs. A quantity of third nodes is the same as the quantity of member nodes in the target set. In other words, the first node may further search the plurality of second nodes for the at least one third node (that is, a member node that belongs to the target set and that is in the plurality of second nodes) based on the quantity of member nodes in the target set and the set key of the target set, and maintain the connection between the first node and the at least one third node.

A process in which the first node searches the plurality of second nodes for the member node in the target set may be as follows: The first node compares the set key of the target set with set keys of the sets to which the plurality of second nodes belong one by one. If the set key of the set to which the at least one third node in the second nodes belongs is the same as the set key of the target set, the at least one third node is used as a member node in the target set.

It may be understood that the third node is a member node that belongs to the target set and that is in the plurality of second nodes. Because the quantity of third nodes is the same as the quantity of member nodes in the target set, the quantity of member nodes in the target set may be used as a basis for ending an action of searching for the member node in the target set by the first node. When a quantity of third nodes found by the first node reaches the quantity of member nodes in the target set, the first node stops searching for the third node.

In a possible design, the target set may be determined based on the quantity of member nodes in the set and/or a user instruction. In this design, a plurality of manners of determining the target set are provided, so that the target set can be flexibly determined.

According to a ninth aspect, a communication method is provided, and is applied to a third node (that is, a member node in a first set). The method includes: receiving first information from a first node, where the first information indicates a first service type, and the first service type corresponds to a first service of the first node; if a service type of the first set is the same as the first service type, sending a connection request to the first node, where the connection request is used to request to establish a connection to the first node; and sending set information of the first set to the first node.

In a possible design, that the third node sends set information of the first set to the first node includes: receiving read information from the first node, where the read information is used to request the set information of the first set; and sending the set information of the first set to the first node.

In a possible design, the set information includes one or more of the following: behavior information of a set user, behavior information of a member node in the set, a quantity of member nodes in the set, or a set key of the set. The behavior information of the set user indicates a behavior of the set user in receiving/sending broadcast information; and the behavior information of the member node indicates a behavior of the member node in receiving/sending broadcast information.

For corresponding beneficial effect in the ninth aspect and any possible design of the ninth aspect, refer to the descriptions in the eighth aspect. Details are not described herein again.

According to a tenth aspect, a communication method is provided. The method is applicable to a scenario in which no set is formed, and can implement flexible set configuration. The method may be applied to a fifth node, and the method includes:
sending first information, where the first information indicates a service type of a target set; receiving a plurality of connection requests from a plurality of second nodes, and establishing a plurality of connections to the plurality of second nodes; and sending first configuration information to a plurality of third nodes in the plurality of second nodes, where the first configuration information indicates that the plurality of third nodes belong to the target set; or
receiving a plurality of pieces of first information from a plurality of second nodes, where each of the plurality of pieces of first information indicates that a second node corresponding to the first information does not form a set; sending a connection request to each of the plurality of second nodes, where the connection request is used to request to establish a connection to the second node; and sending first configuration information to a plurality of third nodes in the plurality of second nodes, where the first configuration information indicates that the plurality of third nodes belong to a target set.

In the method in this embodiment of this application, the fifth node (that is, a set configurator) establishes the connections to the plurality of second nodes (that is, nodes that do not form sets), sends the first configuration information to the plurality of third nodes in the plurality of second nodes, and configures the plurality of third nodes as member nodes in the target set, so that the set members in the target set can be flexibly configured.

In addition, the method provides two manners of establishing the connections between the fifth node (that is, the set configurator) and the plurality of second nodes (that is, the nodes that do not form the sets):
Manner 1: The fifth node (that is, the set configurator) sends the first information (set forming invitation broadcast), where the first information indicates the service type of the target set; and the plurality of second nodes (the nodes that do not form the sets) receive the first information, and when determining that service types of the plurality of second nodes include the service type of the target set, establish the connections to the fifth node. In this way, a procedure in which the fifth node discovers a first node is effectively simplified, thereby improving efficiency of accessing the plurality of second nodes by the fifth node.
Manner 2: The plurality of second nodes (the nodes that do not form the sets) send the first information (configurable set broadcast) to the fifth node, to indicate that the plurality of second nodes do not form the sets; and then the fifth node (that is, the set configurator) receives the first information, and establishes the connections to the plurality of second nodes. In this way, the plurality of second nodes send the first information, so that a procedure in which the fifth node discovers the plurality of second nodes is effectively simplified, and power consumption and signaling overheads of the fifth node are effectively reduced.

In a possible design, the first configuration information is further used to configure at least one of the following: the service type of the target set, a set key of the target set, a quantity of member nodes in the target set, or behavior information of a member node in the target set. The behavior information of the member node indicates a behavior of the member node in receiving/sending broadcast information.

It may be understood that the first configuration information is set information used to configure the target set for the member node in the target set. Correspondingly, the set information of the target set may include at least one of the following: the service type of the target set, the set key of the target set, the quantity of member nodes in the target set, or the behavior information of the member node in the target set.

In a possible design, the plurality of third nodes are determined according to a user instruction. In this design, a user may flexibly determine the third nodes (that is, the member nodes in the target set), so that the fifth node (that is, the set configurator) may flexibly configure the member nodes in the target set in the plurality of second nodes (the nodes that do not form the sets).

In a possible design, the fifth node may further receive a plurality of pieces of configuration response information from the plurality of third nodes, where each of the plurality of pieces of configuration response information indicates that a third node that sends the configuration response information has successfully configured set information of the target set. In this design, the fifth node (that is, the set configurator) receives the configuration response information from the third nodes (that is, the member nodes in the target set), so that the fifth node learns of configuration statuses of the third nodes.

It should be noted that, in this embodiment of this application, the fifth node (that is, the set configurator) may further configure a set user for the target set. In a possible design, the fifth node may further receive the user instruction, where the user instruction is used to determine a first node in the plurality of second nodes as the set user of the target set; and send second configuration information to the first node, where the second configuration information indicates that the first node is the set user of the target set. The service type of the target set corresponds to a first service of the first node. In this design, the fifth node (that is, the set configurator) may configure, according to the received user instruction, the first node in the plurality of second nodes (the nodes that do not form the sets) as the set user of the target set, so that the set user can directly access the member nodes in the target set without obtaining the set information of the target set subsequently, thereby effectively simplifying a procedure in which the set user discovers and accesses the member nodes in the target set.

In a possible design, the second configuration information is further used to configure at least one of the following: the service type of the target set, the set key of the target set, the quantity of member nodes in the target set, or behavior information of the set user in the target set. The behavior information of the set user indicates a behavior of the set user in receiving/sending broadcast information.

It may be understood that the second configuration information is set information used to configure the target set for the set user of the target set. Correspondingly, the set information of the target set may include at least one of the following: the service type of the target set, the set key of the target set, the quantity of member nodes in the target set, or the behavior information of the set user of the target set.

In a possible design, the fifth node may further receive configuration response information from the first node, where the configuration response information indicates that the first node has successfully configured the set information of the target set. In this design, the fifth node (that is, the set configurator) receives the configuration response information from the first node, so that the fifth node learns of a configuration status of the first node.

It should be noted that, after the fifth node (that is, the set configurator) forms the target set, the fifth node may be converted into the member in the target set or the set user of the target set. The following describes different cases:
Case 1: The fifth node may be converted into the set user of the target set.

In Case 1, the fifth node may maintain the connections to the plurality of third nodes, so that the fifth node and the plurality of third nodes (the member nodes in the target set) can directly perform services.

Further, in Case 1, after the connections between the fifth node and the plurality of third nodes are disconnected, the fifth node may further re-establish connections to the plurality of third nodes. There are a plurality of manners in which the fifth node re-establishes the connections to the plurality of third nodes, including but not limited to the following manners:
Manner 1: The fifth node sends second information, where the second information includes first identifiers, and the first identifiers are determined based on the set key of the target set; receives connection requests from the plurality of third nodes; and establishes the connections to the plurality of third nodes. In this way, the fifth node is converted into the set user of the target set, and after the connections between the fifth node and the member nodes in the target set are disconnected, the fifth node sends the second information (that is, directed connection invitation broadcast) to the plurality of third nodes (the member nodes in the target set), thereby effectively simplifying a procedure of re-establishing the connections between the fifth node and the member nodes in the target set.
Manner 2: The fifth node receives third information from the plurality of third nodes, where the third information includes first identifiers; verifies identity information of the plurality of third nodes based on the first identifiers; and when the verification succeeds, sends connection requests to the plurality of third nodes, where the connection requests are used to request to establish the connections to the plurality of third nodes. In this way, the fifth node is converted into the set user of the target set, and after the connections between the fifth node and the member nodes in the target set are disconnected, the fifth node receives the third information (that is, set-formed broadcast) from the plurality of third nodes (the member nodes in the target set), to implement the reconnections between the fifth node and the plurality of third nodes. In other words, the plurality of third nodes initiate a connection procedure, so that power consumption and signaling overheads of the first node can be effectively reduced. In addition, the third information carries the first identifiers determined based on the set key of the target set, so that privacy of the plurality of third nodes (the member nodes in the target set) can be effectively protected.

In this embodiment of this application, "the fifth node verifies identity information of the plurality of third nodes based on the first identifiers" may be understood as that the first node determines, based on the first identifiers, whether the plurality of third nodes belong to the target set. In a possible design, that the fifth node verifies identity information of the plurality of third nodes based on the first identifiers includes: verifying the first identifiers based on the set key of the target set. Therefore, if the fifth node successfully verifies the first identifiers based on the set key of the target set, the fifth node determines that the plurality of third nodes belong to the target set; or if the fifth node fails to verify the first identifiers based on the set key, the fifth node determines that the plurality of third nodes do not belong to the target set.

Case 2: The fifth node may be converted into the member in the target set.

In Case 2, the fifth node may further send fourth information, where the fourth information indicates that the target set has been configured; receive a connection request from a sixth node (that is, a third-party set user), where the connection request is used to request to establish a connection to the fifth node; and establish a connection to the sixth node. In this way, the set configurator forms the target set, may be converted into the member in the target set, and establishes the connection to the sixth node (that is, the third-party set user).

It may be understood that the third-party set user is a set user other than the set user configured by the fifth node (that is, the set configurator).

In Case 2, the fourth information may include the service type and a first identifier of the target set, and the first identifier is determined based on the set key of the target set. In this way, the third-party set user can perceive the service type of the target set, so that a new manager can determine whether to access the target set.

According to an eleventh aspect, a communication method is provided. The method may be applied to a first node (a node that does not form a set), and the method includes:
receiving first information from a fifth node, where the first information indicates a service type of a target set; when determining that the service type of the target set corresponds to a first service of the first node, sending a connection request to the fifth node, where the connection request is used to request to establish a connection to the fifth node; and receiving second configuration information from the fifth node, where the second configuration information indicates that the first node is a set user of the target set; or
sending first information, where the first information indicates that the first node does not form a set; receiving a connection request from a fifth node; establishing a connection to the fifth node; and receiving second configuration information from the fifth node, where the second configuration information indicates that the first node is a set user of a target set.

In the method in this embodiment of this application, the first node establishes the connection to the fifth node, receives the second configuration information from the fifth node, and configures the first node as the set user of the target set.

In a possible design, the second configuration information is further used to configure at least one of the following: the service type of the target set, a set key of the target set, a quantity of member nodes in the target set, or behavior information of the set user in the target set. The behavior information of the set user indicates a behavior of the set user in receiving/sending broadcast information.

It should be noted that, after configuring the set information of the target set, the first node may establish connections to a plurality of third nodes (that is, member nodes in the target set). For a specific connection manner, refer to the related description of establishing the connections between the first node and the third nodes in the second aspect. Details are not described herein again.

For corresponding beneficial effect in the eleventh aspect and any possible design of the eleventh aspect, refer to the descriptions in the tenth aspect. Details are not described herein again.

According to a twelfth aspect, a communication method is provided. The method may be applied to a third node, and the method includes:
receiving first information from a fifth node, where the first information indicates a service type of a target set, and the service type of the target set corresponds to a first service of a first node; when determining that a service type of the third node includes the service type of the target set, sending a connection request to the fifth node, where the connection request is used to request to establish a connection to the fifth node; and receiving first configuration information from the fifth node, where the first configuration information indicates that the third node belongs to the target set; or
sending first information, where the first information indicates that the third node does not form a set; receiving a connection request from a fifth node, and establishing a connection to the fifth node; and receiving first configuration information from the fifth node, where the first configuration information indicates that the third node belongs to a target set.

In a possible design, the first configuration information is further used to configure at least one of the following: the service type of the target set, a set key of the target set, a quantity of member nodes in the target set, or behavior information of a member node in the target set. The behavior information of the member node indicates a behavior of the member node in receiving/sending broadcast information.

In a possible design, the third node may further send configuration response information to the first node, where the configuration response information indicates that the third node has successfully configured set information of the target set.

It should be noted that, after connections between the fifth node and a plurality of third nodes are disconnected, the third nodes may further re-establish connections to the fifth node. A specific connection manner includes but is not limited to the following manners:
Manner 1: The third nodes receive second information from the fifth node, where the second information includes first identifiers; verifies the first identifiers based on set keys of sets to which the third nodes belong; and when the verification succeeds, send connection requests to the fifth node, where the connection requests are used to request to establish the connections to the fifth node.
   In Manner 1, the third nodes verify the first identifiers based on the set keys of the sets to which the third nodes belong. If the first identifiers are successfully verified, the third nodes determine that the sets to which the third nodes belong are the target set; or if the first identifiers fail to be verified, the third nodes determine that the sets to which the third nodes belong are not the target set.
Manner 2: The third nodes send third information, where the third information includes first identifiers, and the first identifiers are determined based on the set key of the target set; and the third nodes receive connection requests from the fifth node, and establish the connections to the fifth node.

In a possible design, the third node may further send fourth information, where the fourth information indicates that the target set has been configured; receive a connection request from a sixth node (a third-party user); and establish a connection to the sixth node. In this design, after the target set is configured, the third node may further send the fourth information (that is, set-formed broadcast), and establish the connection to the sixth node when receiving the connection request of the sixth node.

In a possible design, the fourth information includes the service type and a first identifier of the target set, and the first identifier is determined based on the set key of the target set.

For corresponding beneficial effect in the twelfth aspect and any possible design of the twelfth aspect, refer to the descriptions in the tenth aspect. Details are not described herein again.

According to a thirteenth aspect, a communication apparatus is provided. The apparatus may be applied to a first node, and the apparatus includes a communication module and a processing module. The communication module is configured to receive a plurality of pieces of first information from a plurality of second nodes, where each of the plurality of pieces of first information indicates a service type of a set to which a second node that sends the first information belongs. The processing module is configured to determine a target set from sets to which the plurality of second nodes belong, where a service type of the target set corresponds to a first service of the first node. The communication module is further configured to send a connection request, where the connection request is used to request to establish a connection to a third node, and the third node belongs to the target set. The communication module is further configured to receive information about the target set from the third node.

In a possible design, the first information may further indicate a set identifier of the set to which the second node that sends the first information belongs, and the set identifier is determined based on a set key of the set to which the second node belongs.

In a possible design, the communication module is further configured to send read information to the third node, where the read information is used to request the information about the target set.

In a possible design, the information about the target set includes one or more of the following: behavior information of a set user of the target set, behavior information of a member node in the target set, the service type of the target set, a quantity of member nodes in the target set, or a set key of the target set. The behavior information of the set user indicates a behavior of the set user in receiving/sending broadcast information; and the behavior information of the member node in the target set indicates a behavior of the member node in the target set in receiving/sending broadcast information.

In a possible design, the communication module is further configured to: send second information, where the second information includes a first identifier, and the first identifier is determined based on the set key of the target set; receive a connection request from a fourth node; and establish a connection to the fourth node, where the fourth node is a node that is in the target set and that is different from the third node.

In a possible design, the communication module is further configured to receive third information from a fourth node in the target set, where the third information includes a first identifier. The processing module is further configured to verify identity information of the fourth node based on the first identifier. The communication module is further configured to: when the processing module successfully verifies the first identifier, send a connection request to the fourth node, where the connection request is used to request to establish a connection to the fourth node.

In a possible design, when verifying the identity information of the fourth node based on the first identifier, the processing module is specifically configured to verify the first identifier based on the set key of the target set.

According to a fourteenth aspect, a communication apparatus is provided. The apparatus may be applied to a third node, the third node belongs to a target set, and the apparatus includes a communication module and a processing module. The communication module is configured to: receive a connection request from a first node, and establish a connection to the first node. The communication module is further configured to send information about the target set to the first node.

In a possible design, when being configured to send the information about the target set to the first node, the communication module is specifically configured to: receive read information from the first node, where the read information is used to request the information about the target set; and send the information about the target set to the first node.

In a possible design, the information about the target set includes one or more of the following: a service type of the target set, a quantity of member nodes in the target set, or a set key of the target set.

In a possible design, before being configured to receive the connection request from the first node, the communication module is further configured to send first information, where the first information indicates the service type of the set to which the third node belongs.

In a possible design, the first information further indicates a set identifier of the set to which the third node belongs, and the set identifier is determined based on the set key of the set to which the third node belongs.

According to a fifteenth aspect, a communication apparatus is provided, and is applied to a fourth node. The apparatus includes a communication module and a processing module. The communication module is configured to receive second information from a first node, where the second information includes a first identifier. The processing module is configured to verify the first identifier based on a set key of a set to which the fourth node belongs. The communication module is further configured to: when the processing module successfully verifies the first identifier, send a connection request to the first node, where the connection request is used to request to establish a connection to the first node.

It may be understood that the processing module verifies the first identifier based on the set key of the target set. If the first identifier is successfully verified, the processing module determines that the set to which the fourth node belongs is the target set; or if the first identifier fails to be verified, the processing module determines that the set to which the fourth node belongs is not the target set.

According to a sixteenth aspect, a communication apparatus is provided, and is applied to a fourth node. The fourth node belongs to a target set, and the apparatus includes a communication module. The communication module is configured to send third information, where the third information includes a first identifier, and the first identifier is determined based on a set key of a set to which the fourth node belongs. The communication module is further configured to receive a connection request from the first node, and establish a connection to the first node.

According to a seventeenth aspect, a communication apparatus is provided, and is applied to a first node. The apparatus includes a communication module and a processing module. The processing module is configured to obtain information about a target set by using an out-of-band OOB channel technology, where the information about the target set includes a service type and a set key of the target set, and the service type corresponds to a first service of the first node. The communication module is configured to send first information, where the first information includes a first identifier, and the first identifier is determined based on the set key of the target set.

In a possible design, the communication module is further configured to: receive a connection request from at least one third node; and establish a connection to the at least one third node, where the at least one third node belongs to the target set.

In a possible design, the communication module is further configured to receive second information from at least one third node, where the second information includes the first identifier. The processing module is further configured to verify identity information of the at least one third node based on the first identifier. The communication module is further configured to: when the processing module successfully verifies the first identifier, send a connection request to the at least one third node, where the connection request is used to request to establish a connection to the at least one third node.

In a possible design, when being configured to verify the identity information of the at least one third node based on the first identifier, the processing module is specifically configured to verify the first identifier based on the set key of the target set.

According to an eighteenth aspect, a communication apparatus is provided, and is applied to a third node. The apparatus includes a communication module and a processing module. The communication module is configured to receive first information from a first node, where the first information includes a first identifier. The processing module is configured to verify the first identifier based on a set key of a set to which the third node belongs. The communication module is further configured to: when the processing module successfully verifies the first identifier, send a connection request to the first node, where the connection request is used to request to establish a connection to the first node.

It may be understood that the processing module verifies the first identifier based on the set key of the target set. If the first identifier is successfully verified, the processing module determines that the set to which the third node belongs is the target set; or if the first identifier fails to be verified, the processing module determines that the set to which the third node belongs is not the target set.

According to a nineteenth aspect, a communication apparatus is provided, and is applied to a third node. The third node belongs to a target set, and the apparatus includes a communication module. The communication module is configured to send second information, where the second information includes a first identifier, and the first identifier is determined based on a set key of a set to which the third node belongs. The communication module is further configured to: receive a connection request from the first node, and establish a connection to the first node.

According to a twentieth aspect, a communication apparatus is provided, and is applied to a first node. The apparatus includes a communication module and a processing module. The communication module is configured to send first information, where the first information indicates a first service type, and the first service type corresponds to a first service of the first node. The communication module is further configured to: receive a plurality of connection requests from a plurality of second nodes, and establish a plurality of connections to the plurality of second nodes; and receive set information of at least one first set, where the at least one set includes sets to which the plurality of second nodes belong respectively. The processing module is configured to determine a target set from the at least one first set, where a service type of the target set corresponds to the first service.

In a possible design, the communication module is further configured to send read information to the plurality of second nodes, where the read information is used to request the set information of the at least one first set.

In a possible design, the set information includes a quantity of member nodes in the set and a set key of the set. The communication module is further configured to maintain a connection between at least one third node and the first node based on a quantity of member nodes in the target set and a set key of the target set, where the at least one third node is a member node that is in the plurality of second nodes and that belongs to the target set.

In a possible design, when being configured to maintain the connection between the at least one third node and the first node based on the quantity of member nodes in the target set and the set key of the target set, the communication module is specifically configured to maintain the connection between the at least one third node and the first node when the set key of the target set is the same as a set key of the at least one third node. A quantity of third nodes is the same as the quantity of member nodes in the target set.

In a possible design, the target set is determined based on the quantity of member nodes in the target set and/or a user instruction.

According to a twenty-first aspect, a communication apparatus is provided, and is applied to a third node. The apparatus includes a communication module and a processing module. The communication module is configured to receive first information from a first node, where the first information indicates a first service type, the first service type corresponds to a first service of the first node, and the third node belongs to a first set. If a service type of the first set is the same as the first service type, the communication module is further configured to: send a connection request to the first node, where the connection request is used to request to establish a connection to the first node, and send set information of the first set to the first node.

In a possible design, when being configured to send the set information of the first set to the first node, the communication module is specifically configured to: receive read information from the first node, where the read information is used to request the set information of the first set, and send the set information of the first set to the first node.

In a possible design, the set information includes one or more of the following: behavior information of a set user, behavior information of a member node in the set, a service type of the set, a quantity of member nodes in the set, or a set key of the set. The behavior information of the set user indicates a behavior of the set user in receiving/sending broadcast information; and the behavior information of the member node indicates a behavior of the member node in receiving/sending broadcast information.

According to a twenty-second aspect, a communication apparatus is provided, and is applied to a fifth node. The apparatus includes a communication module and a processing module. The communication module is configured to: send first information, where the first information indicates a service type of a target set; receive a plurality of connection requests from a plurality of second nodes, and establish a plurality of connections to the plurality of second nodes. The communication module is further configured to send configuration information to a plurality of third nodes in the plurality of second nodes, where the configuration information indicates that the plurality of third nodes belong to the target set.

Alternatively, the communication module is configured to: receive a plurality of pieces of first information from a plurality of second nodes, where each of the plurality of pieces of first information indicates that a second node corresponding to the first information does not form a set, and send a connection request to each of the plurality of second nodes, where the connection request is used to request to establish a connection to the second node. The communication module is further configured to: send configuration information to a plurality of third nodes in the plurality of second nodes, where the configuration information indicates that the plurality of third nodes belong to a target set.

In a possible design, the first configuration information is further used to configure at least one of the following: the service type of the target set, a set key of the target set, a quantity of member nodes in the target set, or behavior information of a member node in the target set. The behavior information of the member node indicates a behavior of the member node in receiving/sending broadcast information.

In a possible design, the plurality of third nodes are determined according to a user instruction.

In a possible design, the communication module is further configured to receive a plurality of pieces of configuration response information from the plurality of third nodes, where each of the plurality of pieces of configuration response information indicates that a third node that sends the configuration response information has successfully configured set information of the target set.

In a possible design, the communication module is further configured to: receive the user instruction, where the user instruction is used to determine a first node in the plurality of second nodes as a set user of the target set, and send second configuration information to the first node, where the second configuration information indicates that the first node is the set user of the target set. The service type of the target set corresponds to a first service of the first node.

In a possible design, the second configuration information is further used to configure at least one of the following: the service type of the target set, the set key of the target set, the quantity of member nodes in the target set, or behavior information of the set user in the target set. The behavior information of the set user indicates a behavior of the set user in receiving/sending broadcast information.

In a possible design, the communication module is further configured to: receive configuration response information from the first node, where the configuration response information indicates that the first node has successfully configured the set information of the target set.

It should be noted that, after the fifth node (that is, a set configurator) forms the target set, the fifth node may be converted into the member in the target set or the set user of the target set. The following provides descriptions in different cases:
Case 1: The fifth node may be converted into the member in the target set.
   In Case 1, the communication module is further configured to: send fourth information, where the fourth information indicates that the target set has been configured; receive a connection request from a sixth node, where the connection request is used to request to establish a connection to the fifth node, and the sixth node is a node outside the target set; and establish a connection to the sixth node. The fourth information includes the service type and a first identifier of the target set, and the first identifier is determined based on the set key of the target set.
Case 2: The fifth node may be converted into the set user of the target set.

In Case 2, the communication module is further configured to maintain connections to the plurality of third nodes.

Further, in Case 2, after the connections between the fifth node and the plurality of third nodes are disconnected, the fifth node may further re-establish connections to the plurality of third nodes. There are a plurality of manners in which the fifth node re-establishes the connections to the plurality of third nodes, including but not limited to the following manners:
Manner 1: The communication module is further configured to: send second information, where the second information includes first identifiers, and the first identifiers are determined based on the set key of the target set; receive connection requests from the plurality of third nodes; and establish the connections to the plurality of third nodes.
Manner 2: The communication module is further configured to receive third information from the plurality of third nodes, where the third information includes first identifiers. The processing module is configured to verify identity information of the plurality of third nodes based on the first identifiers. The communication module is further configured to: when the identity information of the plurality of third nodes is successfully verified, send connection requests to the plurality of third nodes, where the connection requests are used to request to establish the connections to the plurality of third nodes.

In a possible design, that the processing module verifies identity information of the plurality of third nodes based on the first identifiers includes: verifying the first identifiers based on the set key of the target set.

According to a twenty-third aspect, a communication apparatus is provided, and is applied to a first node. The apparatus includes a communication module and a processing module. The communication module is configured to: receive first information from a fifth node, where the first information indicates a service type of a target set; when determining that the service type of the target set corresponds to a first service of the first node, send a connection request to the fifth node, where the connection request is used to request to establish a connection to the fifth node. The communication module is further configured to receive second configuration information from the fifth node, where the second configuration information indicates that the first node is a set user of the target set.

Alternatively, the communication module is configured to: send first information, where the first information indicates that the first node does not form a set, receive a connection request from a fifth node, and establish a connection to the fifth node. The communication module is further configured to receive second configuration information from the fifth node, where the second configuration information indicates that the first node is a set user of a target set.

In a possible design, the second configuration information is further used to configure at least one of the following: the service type of the target set, a set key of the target set, a quantity of member nodes in the target set, or behavior information of the set user in the target set. The behavior information of the set user indicates a behavior of the set user in receiving/sending broadcast information.

According to a twenty-fourth aspect, a communication apparatus is provided, and is applied to a third node. The apparatus includes a communication module and a processing module. The communication module is configured to: receive first information from a fifth node, where the first information indicates a service type of a target set, and the service type of the target set corresponds to a first service of a first node; when determining that a service type of the third node includes the service type of the target set, send a connection request to the fifth node, where the connection request is used to request to establish a connection to the fifth node. The communication module is further configured to receive first configuration information from the fifth node, where the first configuration information indicates that the third node belongs to the target set.

Alternatively, the communication module is configured to: send first information, where the first information indicates that the third node does not form a set; receive a connection request from a fifth node, and establish a connection to the fifth node. The communication module is further configured to receive first configuration information from the fifth node, where the first configuration information indicates that the third node belongs to a target set.

In a possible design, the first configuration information is further used to configure at least one of the following: the service type of the target set, a set key of the target set, a quantity of member nodes in the target set, or behavior information of a member node in the target set. The behavior information of the member node indicates a behavior of the member node in receiving/sending broadcast information.

In a possible design, the communication module is further configured to send configuration response information to the first node, where the configuration response information indicates that the third node has successfully configured set information of the target set.

It should be noted that, after the connections between the fifth node and the plurality of third nodes are disconnected, the third nodes may further re-establish connections to the fifth node. A specific connection manner includes but is not limited to the following manners:
Manner 1: The communication module is further configured to receive second information from the fifth node, where the second information includes first identifiers. The processing module is configured to verify the first identifiers based on set keys of sets to which the third nodes belong. The communication module is further configured to: when the verification succeeds, send connection requests to the fifth node, where the connection requests are used to request to establish the connections to the fifth node.
Manner 2: The communication module is further configured to: send third information, where the third information includes first identifiers, and the first identifiers are determined based on the set keys of the target sets to which the third nodes belong; receive connection requests from the fifth node; and establish the connections to the fifth node.

In a possible design, the communication module is further configured to: send fourth information, where the fourth information indicates that the target set has been configured; receive a connection request from a sixth node (a third-party user); and establish a connection to the sixth node.

In a possible design, the fourth information includes the service type and a first identifier of the target set, and the first identifier is determined based on the set key of the target set.

According to a twenty-fifth aspect, a communication apparatus is provided, including at least one processor and an interface circuit. The interface circuit is configured to provide information input and/or information output for the at least one processor, and the at least one processor implements the method according to any one of the first aspect to the twelfth aspect through a logic circuit or by executing code instructions.

Optionally, the communication apparatus may further include a memory, configured to store instructions executed by the processor, store input data required by the processor to run the instructions, or store data generated after the processor runs the instructions.

According to a twenty-sixth aspect, a computer-readable storage medium is provided. The storage medium stores a computer program or instructions. When the computer program or the instructions are executed by a communication apparatus, the method according to any one of the first aspect to the twelfth aspect is implemented.

According to a twenty-seventh aspect, a computer program product is provided, including instructions. When the instructions are run on a computer, the computer is enabled to perform the method according to any one of the first aspect to the twelfth aspect.

According to a twenty-eighth aspect, a terminal is provided. The terminal includes the communication apparatus according to the twenty-fifth aspect.

For beneficial effect corresponding to the thirteenth aspect to the twenty-eighth aspect, refer to the related descriptions of the first aspect to the twelfth aspect. Details are not described herein again.

### BRIEF DESCRIPTION OF DRAWINGS

FIG. 1 is a diagram of a possible application scenario according to an embodiment of this application;
FIG. 2 is a schematic flowchart of a communication method;
FIG. 3 is a schematic flowchart 1 of a first communication method according to an embodiment of this application;
FIG. 4 is a schematic flowchart 2 of a first communication method according to an embodiment of this application;
FIG. 5 is a schematic flowchart 3 of a first communication method according to an embodiment of this application;
FIG. 6 is a schematic flowchart 4 of a first communication method according to an embodiment of this application;
FIG. 7 is a schematic flowchart 1 of a second communication method according to an embodiment of this application;
FIG. 8 is a schematic flowchart 2 of a second communication method according to an embodiment of this application;
FIG. 9 is a schematic flowchart of a third communication method according to an embodiment of this application;
FIG. 10A is a schematic flowchart 1 of a fourth communication method according to an embodiment of this application;
FIG. 10B is a schematic flowchart 2 of a fourth communication method according to an embodiment of this application;
FIG. 10C is a schematic flowchart 3 of a fourth communication method according to an embodiment of this application;
FIG. 10D is a schematic flowchart 4 of a fourth communication method according to an embodiment of this application;
FIG. 10E is a schematic flowchart 5 of a fourth communication method according to an embodiment of this application;
FIG. 11 is a schematic flowchart 6 of a fourth communication method according to an embodiment of this application;
FIG. 12A is a schematic flowchart 1 of a fifth communication method according to an embodiment of this application;
FIG. 12B is a schematic flowchart 2 of a fifth communication method according to an embodiment of this application;
FIG. 13 is a schematic flowchart 3 of a fifth communication method according to an embodiment of this application;
FIG. 14 is a diagram of a structure of an apparatus according to an embodiment of this application; and
FIG. 15 is a diagram of another structure of an apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The following describes some terms in embodiments of this application, to facilitate understanding of a person skilled in the art.
1. A communication set is briefly referred to as a set below. One communication set includes a plurality of member devices (also referred to as member nodes), and each member device carries set information of a set to which the member device belongs. The communication set in embodiments of this application relates to a fixed set and a configurable set. Set information of the fixed set cannot be flexibly configured, and set information of the configurable set can be flexibly configured. For a description of the set information, refer to the following.
2. A set user, also referred to as a manager below, is configured to discover, access, or manage a device of a set member in a communication set. In embodiments of this application, an example in which the set user is a first node is used for description. In some embodiments, a target set is determined by the set user from a plurality of fixed sets. In some other embodiments, the target set is flexibly configured by a set configurator. It may be understood that the set user is merely a name of a node or a device that uses the set, and may have another name in another possible embodiment. This is not limited in embodiments of this application.
3. A set member node may also be referred to as a set member device. In some embodiments below, an example in which the set member node is a second node, a third node, or a fourth node is used for description.
4. A set configurator is a device configured to form a set and configure a set member and a set user. In some possible embodiments, the set configurator may be converted to the set member or the set user after forming the set. In embodiments of this application, an example in which the set configurator is a fifth node is used for description.
5. A third-party set user is a set user other than a set user specified by a set configurator. In embodiments of this application, an example in which the third-party set user is a sixth node is used for description.
6. Broadcast information: Broadcast is an information transmission manner, and refers to a manner in which a node on a network sends information. A range to which the information can be transmitted is referred to as a broadcast domain. Another node in the broadcast domain can receive the information. Information sent in a broadcast manner may be referred to as the broadcast information, and includes but is not limited to a broadcast channel and/or system information.
7. Set information includes at least one of behavior information of a set user, behavior information of a set member node, a set key, a quantity of set member nodes, or a set service type. The behavior information of the set user indicates a behavior of the set user in receiving/sending broadcast information; the behavior information of the set member node indicates a behavior of the set member node in receiving/sending broadcast information; the set key is used to verify identity information of the set member node; the quantity of set member nodes may indicate a quantity of member nodes in the set; and the set service type indicates a service supported by the member node in the set. It should be understood that the set service type may include one or more service types, that is, the member node in the set may support one or more services. In a possible implementation, the set service type may be represented by a universally unique identifier (universally unique identifier, UUID).

It should be noted that, to clearly describe the technical solutions in embodiments of this application, words such as "first" and "second" are used in the descriptions of embodiments of this application to distinguish between same items or similar items that provide basically same functions or purposes. A person skilled in the art may understand that the words such as "first" and "second" do not limit a quantity or an execution sequence, and the words such as "first" and "second" do not indicate a definite difference. In addition, in the descriptions of this application, unless otherwise specified, "at least one" means one or more, and "a plurality of" means two or more. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

Embodiments of this application may be applied to various wireless communication scenarios, for example, scenarios such as vehicle-mounted communication, smart home communication, intelligent transportation communication, robot communication, unmanned aerial vehicle communication, intelligent manufacturing, intelligent wearable, and intelligent terminal.

With continuous development of global communication technologies, wireless communication technologies have surpassed wired communication technologies in a development speed and application, and present a booming development trend. Smart devices such as smart transportation devices, smart home devices, and robots are gradually entering daily life of people. In a wireless communication scenario in which the smart device is located, a plurality of nodes that are located in a specific area or range and that support a same wireless communication technology may form a communication system. A wireless communication technology on which communication between communication nodes depends may be a short-range communication technology like Bluetooth, a Wireless Fidelity (wireless fidelity, Wi-Fi) system, or a vehicle-mounted universal short-range communication technology, or any short-range communication technology that may appear in the future. This is not specifically limited in this application.

In a short-range communication scenario, a plurality of independent devices that are used to cooperatively implement one or more services are generally defined as a communication set, so that a manager in a short-range communication system discovers, accesses, and manages these devices together.

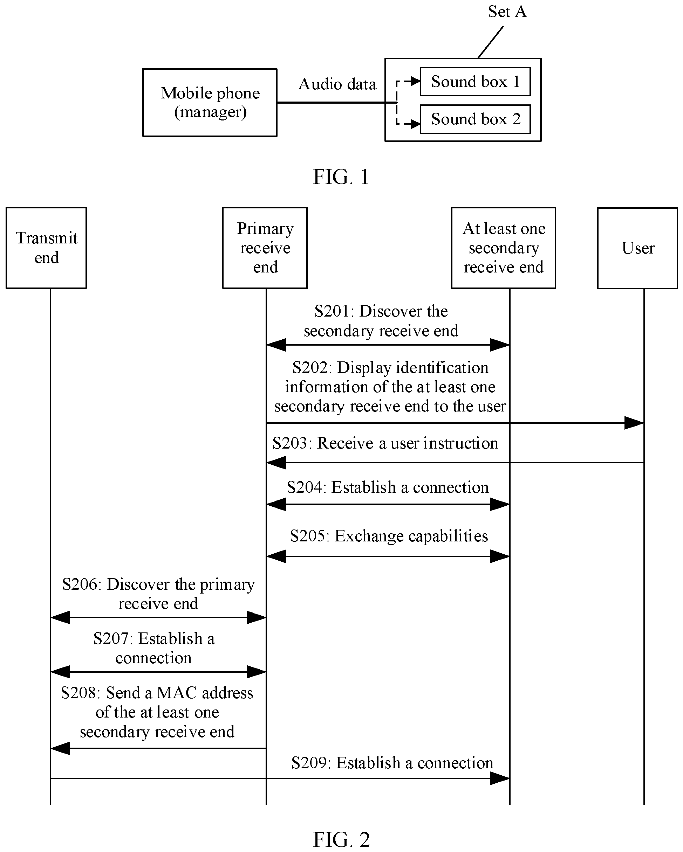

For example, FIG. 1 shows a possible application scenario according to an embodiment of this application. As shown in FIG. 1, a mobile phone may serve as a manager, a sound box 1 and a sound box 2 are member nodes in a set A, and a service type of the set A is an audio playback service. Therefore, the mobile phone may discover the sound box 1 and the sound box 2, and establish connections to the sound box 1 and the sound box 2 respectively. After generating audio data, the mobile phone may send the audio data to the sound box 1 and the sound box 2, and control the sound box 1 and the sound box 2 to play audios corresponding to different channels of the audio data.

It should be understood that the network architecture and the service scenarios described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

It should be noted that, in specific implementation, if a component in a device performs wireless communication with another component in the device, the device may correspond to a plurality of nodes; if a device performs wireless communication with another device, the device may correspond to one node; or if a system including a plurality of devices performs wireless communication with another device or another system, one node may correspond to a plurality of devices at the same time. A correspondence between the node and the device is not specifically limited in this application. For ease of description, in this specification, an example in which one node corresponds to one device is mainly used for description. Therefore, unless otherwise specified, "node" and "device" in this specification may be interchanged.

In some existing communication technologies, a coordinated set identification profile (coordinated set identification profile) is proposed. In the coordinated set identification profile, a manager and a member are defined. The manager is responsible for discovering and identifying a member in a set. First, the manager is connected to a member A in the set, and obtains a set key through the connection. Then, another member in the set other than the member A sends broadcast information that carries a resolvable set identifier (resolvable set identifier, RSI) generated based on the set key, and the manager scans the broadcast information, and verifies and identifies the another member in the set based on the set key. However, in this technical solution, a set device member is fixed, and a service supported by the member is also fixed and cannot be flexibly configured. In addition, the manager cannot perceive the service of the member device in the set, and a discovery procedure is single and has low efficiency.

In addition, in a Wi-Fi display (Wi-Fi display, WFD) technology, a transmit end (WFD source) and a receive end (WFD sink) are defined, and a coupled receive end (coupled sink) is defined for a plurality of receive ends. The coupled receive end includes a primary receive end (primary sink) and at least one secondary receive end (secondary sink). The transmit end may send video data generated by the transmit end to the primary receive end for display, and the transmit end may send audio data generated by the transmit end to the at least one secondary receive end for display. The transmit end may serve as a manager, and the primary receive end and the at least one secondary receive end are members in a communication set. As shown in FIG. 2, a process in which the manager discovers the set member includes the following steps.

S201: The primary receive end discovers the at least one secondary receive end.

S202: The primary receive end displays identification information of the at least one secondary receive end to a user.

S203: The primary receive end receives a user instruction of the user for the identification information of the at least one secondary receive end.

S204: The primary receive end establishes a connection to the at least one secondary receive end.

S205: The primary receive end and the at least one secondary receive end exchange capabilities to each other.

It should be noted that the capability exchange may be understood that the primary receive end and the at least one secondary receive end indicate, to each other, service types supported by the primary receive end and the at least one secondary receive end.

S206: The transmit end discovers the primary receive end.

S207. The transmit end establishes a connection to the primary receive end.

S208: The primary receive end sends a MAC address of the at least one secondary receive end to the transmit end.

S209: The transmit end establishes a one-to-one connection to the at least one secondary receive end.

However, in this technical solution, the communication set is bound to a projection application, and the set member can support only a fixed service and the service cannot be flexibly configured. Consequently, a use scenario of the set member is limited. In addition, the process in which the manager discovers the set member is complex, and communication overheads are high.

To resolve the foregoing technical problem, embodiments of this application provide five communication methods. A first communication method, a second communication method, and a third communication method are applicable to a scenario in which a fixed set has been formed, to optimize a procedure in which a set user discovers and accesses a set member, so as to improve efficiency of communication between a manager and the set member, and reduce communication overheads. A fourth communication method and a fifth communication method are applicable to a scenario in which no set is formed, to flexibly form a set and optimize a procedure in which a set user discovers and accesses a set member, so as to improve efficiency of communication between the set user and the set member, and reduce communication overheads.

With reference to specific accompanying drawings, the following describes in detail the five communication methods provided in embodiments of this application.

### Embodiment 1

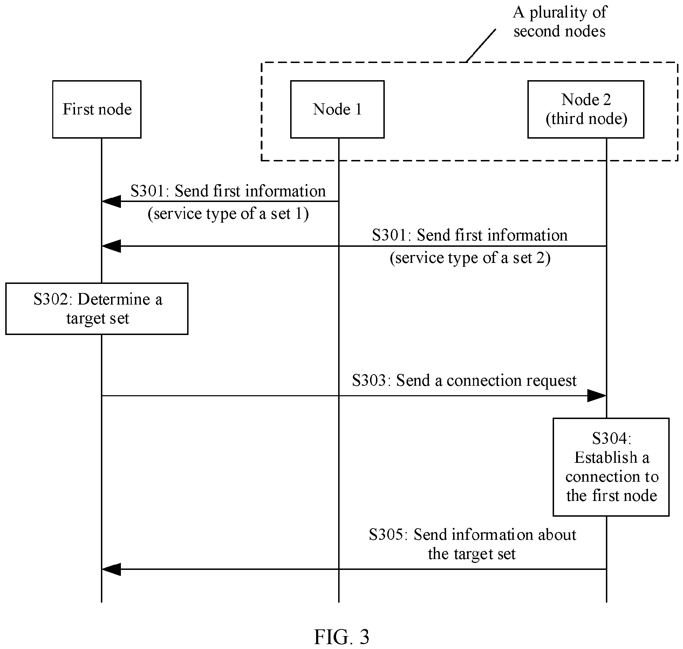

FIG. 3 is a schematic flowchart 1 of a first communication method according to an embodiment of this application. The method is applicable to a fixed set discovery and access scenario. The method includes the following steps.

S301: A plurality of second nodes (for example, a node 1 and a node 2) send first information. Correspondingly, a first node receives the plurality of pieces of first information from the plurality of second nodes.

In a possible implementation, the first information may be carried in broadcast information. In other words, the plurality of second nodes may send the first information in a broadcast manner.

In this embodiment of this application, each of the plurality of pieces of first information indicates a service type of a set to which a second node that sends the first information belongs. For example, the plurality of second nodes include the node 1 and the node 2, first information sent by the node 1 indicates a service type of a set 1 to which the node 1 belongs, and first information sent by the node 2 indicates a service type of a set 2 to which the node 2 belongs. The node 1 and the node 2 may belong to a same fixed set or different fixed sets. Correspondingly, the set 1 and the set 2 may be a same set or different sets.

Further, the first information further indicates a set identifier of the set to which the second node that sends the first information belongs. For example, the plurality of second nodes include the node 1 and the node 2. The first information sent by the node 1 may further indicate a set identifier of the set to which the node 1 belongs, and the first information sent by the node 2 may indicate a set identifier of the set to which the node 2 belongs. It should be understood that an example in which the second nodes are merely the node 1 and the node 2 is used in this embodiment of this application, and this is not a limitation. In another possible embodiment, the second nodes may include three or more nodes.

The set identifier of the set to which the second node belongs is determined based on a set key of the set to which the second node belongs. In a possible implementation, the second node may generate the set identifier based on the set key of the set to which the second node belongs and a hash algorithm.

In this embodiment of this application, there may be one or more set service types. Correspondingly, a member node in a set may support one or more services. In a possible implementation, the set service type may be represented by a universally unique identifier (universally unique identifier, UUID).

S302: The first node determines a target set from sets to which the plurality of second nodes belong, where a service type of the target set corresponds to a first service of the first node.

In this embodiment of this application, the service type of the target set is a service type supported by a member node in the target set. Therefore, "a service type of the target set corresponds to a first service of the first node" may be understood as that the member node in the target set may be configured to support the first service of the first node. The first service may be, for example, an audio playback service or a video playback service.

There are a plurality of specific implementations in which the first node determines the target set from the sets to which the plurality of second nodes belong, including but not limited to the following manners:
Implementation 1: The first node may determine, based on the first service, the target set from the sets to which the plurality of second nodes belong. For example, the first service is an audio playback service, the service type of the set to which the node 1 belongs is an audio playback service, and the service type of the set to which the node 2 belongs is a video playback service. In this case, the first node uses the set to which the node 1 belongs as the target set.
Implementation 2: The first node may determine, based on the first service and vendor information of the plurality of second nodes, the target set from the sets to which the plurality of second nodes belong. For example, the first service is a voice service, the service types of the sets to which the node 1 and the node 2 belong are both audio playback services, a vendor of the node 1 is A, and vendors of the first node and the node 2 are both B. In this case, the first node uses the set to which the node 1 belongs as the target set. Optionally, the first node may determine vendor information of each second node based on a media access control (media access control, MAC) address carried in the broadcast information that carries the first information.

S303: The first node sends a connection request to a third node in the target set, where the connection request is used to request to establish a connection to the third node. Correspondingly, the third node receives the connection request.

It should be understood that, in step S302, if the target set determined by the first node is a set to which the third node belongs, the first node performs step S303. In FIG. 3, for example, the third node is the node 2, and the target set is the set 2 to which the node 2 belongs.

In a possible implementation, the connection request may carry the service type and/or a set key of the target set. In this way, it is convenient for the third node to verify identity information of the first node, so that a secure and reliable communication connection can be established between the first node and the third node.

S304: The third node establishes the connection to the first node.

S305: The third node sends information about the target set to the first node. Correspondingly, the first node receives the information about the target set.

In this embodiment of this application, the information about the target set includes one or more of the following: behavior information of a set user of the target set, behavior information of a member node in the target set, the service type of the target set, a quantity of member nodes in the target set, or the set key of the target set. The behavior information of the set user indicates a behavior of the set user in receiving/sending broadcast information; and the behavior information of the member node in the target set indicates a behavior of the member node in the target set in receiving/sending broadcast information.

In the communication method shown in FIG. 3, the first information sent by the plurality of second nodes (that is, member nodes in a fixed set) may indicate the service types of the sets to which the second nodes that send the first information belong. Therefore, after receiving the first information, the first node (that is, the set user) may perceive the service types of the sets to which the plurality of second nodes belong, so that the first node determines the proper target set to perform the first service of the first node. In addition, the first node may obtain the information about the target set by establishing the connection to the third node. Compared with a conventional-technology technical solution in which a first node obtains information about a target set by establishing connections to all member nodes in the target set, this solution can effectively improve efficiency of obtaining the information about the target set by the first node, and effectively reduce communication overheads.

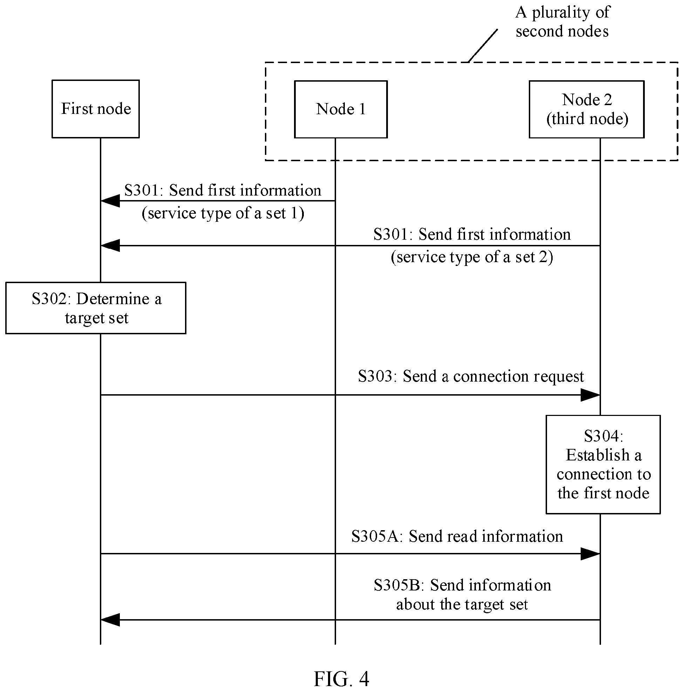

FIG. 4 is a schematic flowchart 2 of the first communication method according to this embodiment of this application. In FIG. 4, S305 may include the following steps.

S305A: The first node sends read information to the third node, where the read information is used to request the information about the target set. Correspondingly, the third node receives the read information.

S305B: The third node sends the information about the target set to the first node. Correspondingly, the first node receives the information about the target set.

In FIG. 4, the first node may read the information about the target set from the third node by sending the read information to the third node. This effectively simplifies a procedure in which the first node obtains the information about the target set, thereby improving efficiency of obtaining the information about the target set by the first node.

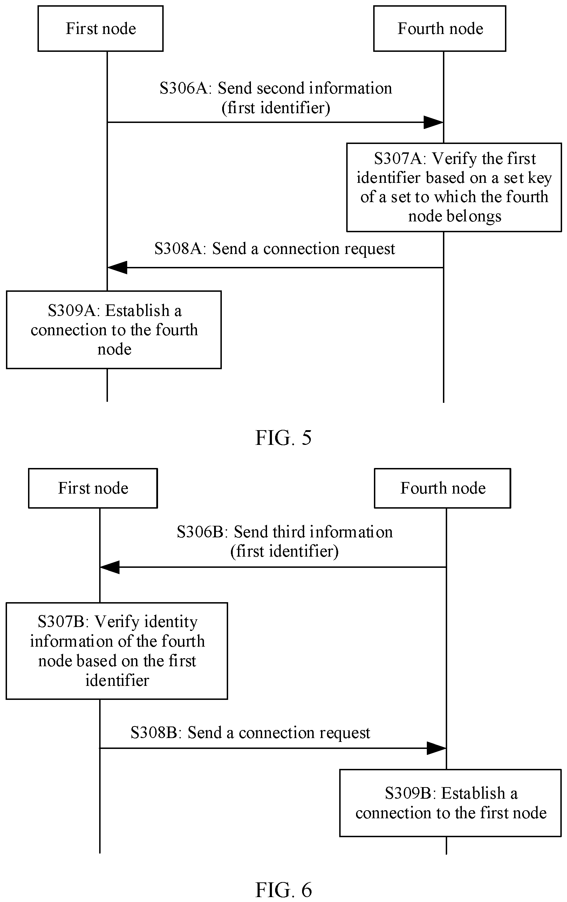

It should be noted that after the first node (that is, the set user) obtains the information about the target set, there are a plurality of manners in which the first node establishes a connection to a fourth node (that is, a node that is in the target set and that is different from the third node) in the target set, including but not limited to the following manners:
Implementation 1: The first node (that is, the set user) triggers an access procedure. FIG. 5 is a schematic flowchart 3 of the first communication method according to this embodiment of this application. In FIG. 5, a process in which the first node establishes the connection to the fourth node includes the following steps.

S306A: The first node sends second information. Correspondingly, the fourth node receives the second information.

The second information includes a first identifier, and the first identifier is determined based on the set key of the target set. In a possible implementation, the first node may generate the first identifier based on the set key of the target set and the hash algorithm.

In some possible implementations, the second information may also be referred to as "directed connection invitation broadcast", and the second information may be carried in the broadcast information.

S307A: The fourth node verifies the first identifier based on a set key of a set to which the fourth node belongs.

It may be understood that the fourth node verifies the first identifier based on the set key of the set to which the fourth node belongs. If the first identifier is successfully verified, the fourth node determines that the set to which the fourth node belongs is the target set; or if the first identifier fails to be verified, the fourth node determines that the set to which the fourth node belongs is not the target set.

In a possible implementation, a process in which the fourth node verifies the first identifier based on the set key of the target set may be: determining a hash value based on the set key, the hash algorithm, and a random number part of the first identifier, and comparing the hash value with a hash value part of the first identifier. If the hash value is the same as the hash value part of the first identifier, the first identifier is successfully verified; or if the hash value is different from the hash value part of the first identifier, the first identifier fails to be verified.

S308A: When successfully verifying the first identifier, the fourth node sends a connection request to the first node, where the connection request is used to request to establish a connection to the first node. Correspondingly, the first node receives the connection request.

S309A: The first node establishes the connection to the fourth node.

In Implementation 1, the first node (that is, the set user) sends the second information (that is, directed connection invitation broadcast) to invite the member node in the target set to establish the connection to the first node. In this way, efficiency of accessing the first node by the member node in the target set can be effectively improved. In addition, the second information carries the first identifier determined based on the set key of the target set, so that privacy of the fourth node (that is, the member node in the target set) can be protected.

Implementation 2: The member node in the target set triggers an access procedure. FIG. 6 is a schematic flowchart 4 of the first communication method according to this embodiment of this application. In FIG. 6, a process in which the first node establishes the connection to the fourth node includes the following steps.

S306B: The fourth node sends third information. Correspondingly, the first node receives the third information.

The third information includes a first identifier, and the first identifier is determined based on a set key of a set to which the fourth node belongs. In a possible implementation, the fourth node may generate the first identifier based on the set key of the set to which the fourth node belongs and the hash algorithm.

In some possible implementations, the third information may be carried in the broadcast information.

S307B: The first node verifies identity information of the fourth node based on the first identifier.

In this embodiment of this application, "the first node verifies identity information of the fourth node based on the first identifier" may be understood as that the first node determines, based on the first identifier, whether the fourth node belongs to the target set. In a possible implementation, the first node may verify the first identifier based on the set key of the target set. If the first node successfully verifies the first identifier based on the set key of the target set, the first node determines that the fourth node belongs to the target set; or if the first node fails to verify the first identifier based on the set key, the first node determines that the fourth node does not belong to the target set. In this way, the first node verifies the first identifier based on the set key, to determine whether the fourth node belongs to the target set, so that accuracy of verifying the identity information of the fourth node by the first node can be effectively improved.

In a possible implementation, a process in which the first node verifies the first identifier based on the set key of the target set may be: determining a hash value based on the set key, the hash algorithm, and a random number part of the first identifier, and comparing the hash value with a hash value part of the first identifier. If the hash value is the same as the hash value part of the first identifier, the first identifier is successfully verified; or if the hash value is different from the hash value part of the first identifier, the first identifier fails to be verified.

S308B: When successfully verifying the identity information of the fourth node, the first node sends a connection request to the fourth node, where the connection request is used to request to establish a connection to the fourth node. Correspondingly, the fourth node receives the connection request.

S309B: The fourth node establishes the connection to the first node.

In Implementation 2, the fourth node (that is, the member node in the target set) actively initiates the access procedure, and when the first node successfully verifies the identity information of the fourth node, the first node establishes the connection to the fourth node, so that power consumption and signaling overheads of the first node can be effectively reduced. In addition, the third information carries the first identifier determined based on the set key of the target set, so that privacy of the fourth node (that is, the member node in the target set) can be protected.

### Embodiment 2

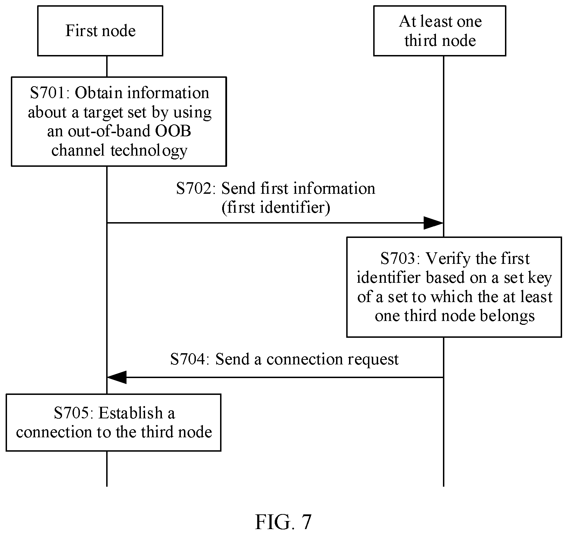

FIG. 7 is a schematic flowchart 1 of a second communication method according to an embodiment of this application. The method is applicable to a fixed set discovery and access scenario. The method includes the following steps.

S701: A first node obtains information about a target set by using an out-of-band (out of band, OOB) channel technology.

The information about the target set includes one or more of the following: behavior information of a set user of the target set, behavior information of a member node in the target set, a service type of the target set, a quantity of member nodes in the target set, or a set key of the target set. The service type corresponds to a first service of the first node. For detailed descriptions of the information about the target set and the first service, refer to the foregoing descriptions. Details are not described herein again.

In this embodiment of this application, the OOB may include but is not limited to any one of the following: barcode scanning, two-dimensional code scanning, or near field communication (near field communication, NFC).

Example 1: The first node may obtain the information about the target set by scanning a barcode or a two-dimensional code.

Example 2: The first node may establish an NFC connection to a node A, and obtain the information about the target set through the NFC connection.

In S701, the first node obtains the information about the target set by using the OOB technology, so that efficiency of obtaining the information about the target set by the first node can be effectively improved.

S702: The first node sends first information, where the first information includes a first identifier. Correspondingly, at least one third node receives the first information. The first identifier is determined based on the set key of the target set. In a possible implementation, the first node may generate the first identifier based on the set key of the target set and a hash algorithm.

In a possible implementation, the first information may be carried in broadcast information. In other words, the first information may be sent in a broadcast manner.

S703: The at least one third node verifies the first identifier based on a set key of a set to which the at least one third node belongs.

It may be understood that the at least one third node verifies the first identifier based on the set key of the set to which the at least one third node belongs. If the first identifier is successfully verified, the at least one third node determines that the set to which the at least one third node belongs is the target set; or if the first identifier fails to be verified, the at least one third node determines that the set to which the at least one third node belongs is not the target set.

In a possible implementation, a process in which the at least one third node verifies the first identifier based on the set key of the target set may be: determining a hash value based on the set key, the hash algorithm, and a random number part of the first identifier, and comparing the hash value with a hash value part of the first identifier. If the hash value is the same as the hash value part of the first identifier, the first identifier is successfully verified; or if the hash value is different from the hash value part of the first identifier, the first identifier fails to be verified.

S704: When successfully verifying the first identifier, the at least one third node sends a connection request to the first node, where the connection request is used to request to establish a connection to the first node. Correspondingly, the first node receives the connection request.

S705: The first node establishes the connection to the at least one third node.

In the communication method shown in FIG. 7, after obtaining the information about the target set, the first node may send the first information (that is, directional connection invitation), receive the connection request from the at least one third node, and establish the connection to the at least one third node. This can effectively simplify an access procedure between the first node and the at least one third node (that is, the member node in the target set). In addition, the first information carries the first identifier, so that privacy of the at least one third node (that is, the member node in the target set) can be effectively protected.

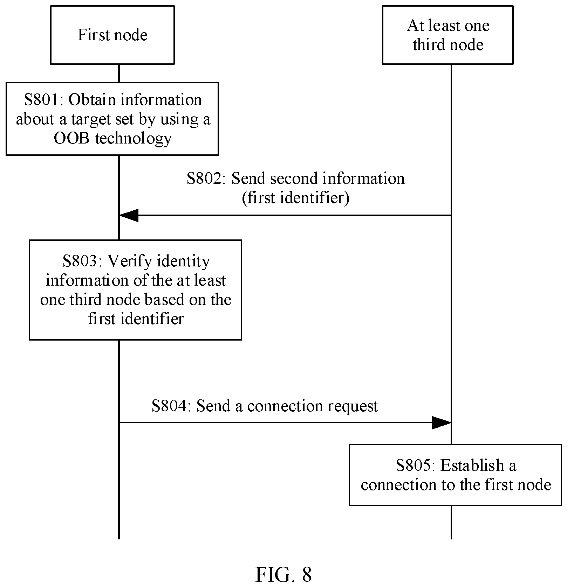

FIG. 8 is a schematic flowchart 2 of the second communication method according to this embodiment of this application. The method includes the following steps.

S801: The first node obtains the information about the target set by using the OOB technology.

For a detailed description of 801, refer to the related description of 701. Details are not described herein again.

S802: The at least one third node sends second information. Correspondingly, the first node receives the second information.

The second information includes a first identifier, and the first identifier is determined based on the set key of the set to which the at least one third node belongs. In a possible implementation, the at least one third node may generate the first identifier based on the set key of the set to which the at least one third node belongs and the hash algorithm.

S803: The first node verifies identity information of the at least one third node based on the first identifier.

In this embodiment of this application, "the first node verifies identity information of the at least one third node based on the first identifier" may be understood as that the first node determines, based on the first identifier, whether the at least one third node belongs to the target set. In a possible implementation, the first node may verify the first identifier based on the set key of the target set. If the first node successfully verifies the first identifier based on the set key of the target set, the first node determines that the at least one third node belongs to the target set; or if the first node fails to verify the first identifier based on the set key, the first node determines that the at least one third node does not belong to the target set. In this way, accuracy of verifying the identity information of the at least one third node by the first node can be effectively improved.

S804: When successfully verifying the identity information of the at least one third node, the first node sends a connection request to the at least one third node, where the connection request is used to request to establish a connection to the at least one third node. Correspondingly, the at least one third node receives the connection request.

It should be understood that, in S804, if the first node successfully verifies the first identifier based on the set key of the target set, the first node determines that the at least one third node belongs to the target set, and it may be considered that the first node successfully verifies the identity information of the at least one third node.

S805: The at least one third node establishes the connection to the first node.

In the communication method shown in FIG. 8, the at least one third node (that is, the member node in the target set) actively initiates an access procedure, and when the first node successfully verifies the identity information of the at least one third node, the first node establishes the connection to the at least one third node, so that power consumption of the first node can be effectively reduced. In addition, the second information carries the first identifier generated based on the set key of the target set, so that privacy of the at least one third node (that is, the member node in the target set) can be protected.

### Embodiment 3

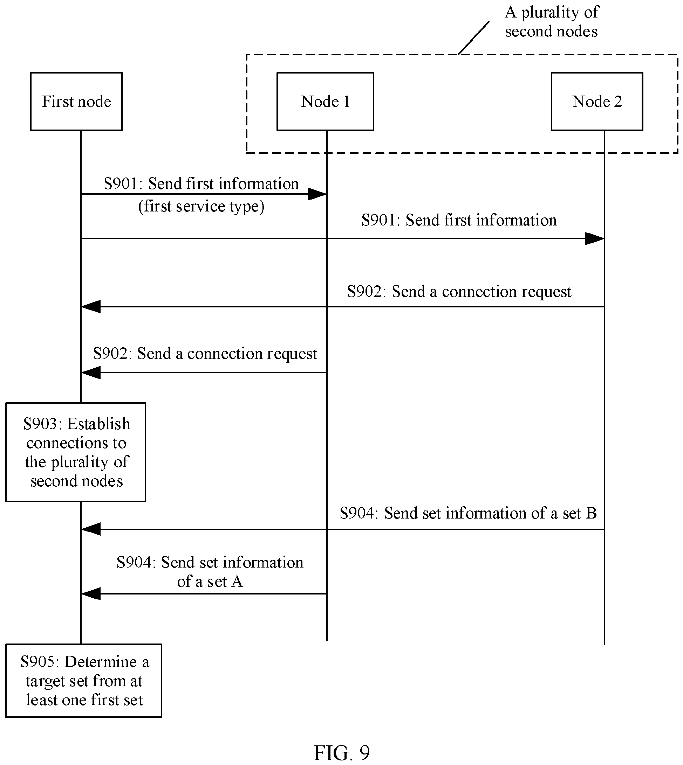

FIG. 9 is a schematic flowchart of a third communication method according to an embodiment of this application. The method is applicable to a scenario in which a set user discovers and accesses a member in a fixed set. The method includes the following steps.

S901: A first node sends first information. Correspondingly, one or more second nodes receive the first information.

The first information indicates a first service type, and the first service type corresponds to a first service of the first node. It should be understood that the first service type is a service type of a target set to be determined by the first node. For a specific description of the first service, refer to the foregoing description. Details are not described herein again.

S902: If the plurality of second nodes determine that service types of the plurality of second nodes are the same as the first service type, the plurality of second nodes send a plurality of connection requests to the first node. Correspondingly, the first node receives the plurality of connection requests.

It may be understood that, in FIG. 9, for example, the plurality of second nodes are merely a node 1 and a node 2. In another embodiment, the second nodes may further include more nodes.

S903: The first node establishes connections to the plurality of second nodes.

For example, as shown in FIG. 9, the plurality of second nodes are the node 1 and the node 2, and service types of the node 1 and the node 2 are the same as the first service type. In this case, the node 1 and the node 2 send connection requests to the first node, so that the first node may establish connections to the node 1 and the node 2 separately.

S904: Each of the plurality of second nodes sends, to the first node, set information of a set to which the second node belongs. Correspondingly, the first node receives set information of at least one first set. The at least one set includes sets to which the plurality of second nodes belong respectively.

For example, the plurality of second nodes are the node 1 and the node 2. The node 1 belongs to a set A, and the node 1 may send set information of the set A to the first node. The node 2 belongs to a set B, and the node 2 may send set information of the set B to the first node.

In a possible implementation, the set information of the first set includes one or more of the following: behavior information of a set user of the first set, behavior information of a member node in the first set, a service type of the first set, a quantity of member nodes in the first set, or a set key of the first set. The behavior information of the set user of the first set indicates a behavior of the set user in receiving/sending broadcast information; and the behavior information of the member node in the first set indicates a behavior of the member node in receiving/sending broadcast information. For a specific description of the set information, refer to the foregoing description. Details are not described herein again.

Further, step S904 may include the following steps.

S904A: The first node sends read information to the plurality of second nodes, where the read information is used to request the set information of the at least one first set. Correspondingly, the plurality of second nodes receive the read information.

S904B: The second node sends the set information of the first set to the first node. Correspondingly, the first node receives the set information of the first set.

In this way, the first node sends the read information to the plurality of second nodes, so that the plurality of second nodes may send, to the first node, the set information of the sets to which the plurality of second nodes belong, thereby effectively simplifying a procedure in which the first node obtains the set information of the at least one first set, and improving efficiency of determining the target set by the first node.

S905: The first node determines the target set from the at least one first set.

The service type of the target set corresponds to the first service. In this embodiment of this application, the service type of the target set is a service type supported by a member node in the target set. "A service type of the target set corresponds to a first service of the first node" may be understood as that the member node in the target set may be configured to support the first service of the first node.

In a possible implementation, the target set is determined by the first node based on at least one of a quantity of member nodes in the target set, a user instruction, or vendor information of the member node in the target set. In this way, a plurality of manners of determining the target set are provided, so that the target set can be flexibly determined. Optionally, the first node may determine vendor information of each second node based on a MAC address carried in the broadcast information that carries the first information.

Example 1: The at least one set includes a set 1 and a set 2, a quantity of member nodes in the set 1 is 3, a quantity of member nodes in the set 2 is 5, and the quantity of member nodes in the set 2 is greater than the quantity of member nodes in the set 1. In this case, the first node may determine the set 2 as the target set.

Example 2: The first node receives the user instruction, where the user instruction instructs to determine a set 1 to which the node 1 belongs as the target set. In this case, the first node determines the set 1 as the target set.

Example 3: A set 1 and a set 2 are included. A vendor of the node 1 is A, and vendors of the first node and the node 2 are both B. In this case, the first node uses a set to which the node 1 belongs as the target set.

Example 4: The first service is an audio playback service, service types of sets to which the node 1 and the node 2 belong are both audio playback services, a vendor of the node 1 is A, and vendors of the first node and the node 2 are both B. In this case, the first node uses the set to which the node 1 belongs as the target set.

It should be noted that after determining the target set, the first node needs to search the plurality of second nodes for the member node in the target set, and the member node in the target set includes at least one third node. In a possible implementation, the set information includes a quantity of member nodes in the set and a set key of the set. Further, the first node may maintain a connection between the at least one third node and the first node when a set key of the target set is the same as a set key of a set to which the at least one third node belongs. A quantity of third nodes is the same as the quantity of member nodes in the target set. In other words, the first node may further search the plurality of second nodes for the at least one third node based on the quantity of member nodes in the target set and the set key of the target set, and maintain the connection between the first node and the at least one third node.

A process in which the first node searches the plurality of second nodes for the member node in the target set may be as follows: The first node compares the set key of the target set with set keys of the sets to which the plurality of second nodes belong one by one. If the set key of the set to which the at least one third node in the second nodes belongs is the same as the set key of the target set, the at least one third node is used as a member node in the target set.

It may be understood that the third node is a member node that belongs to the target set and that is in the plurality of second nodes. Because the quantity of third nodes is the same as the quantity of member nodes in the target set, the quantity of member nodes in the target set may be used as a basis for ending an action of searching for the member node in the target set by the first node. When a quantity of third nodes found by the first node reaches the quantity of member nodes in the target set, the first node stops searching for the third node. For example, the quantity of member nodes in the target set is 3, and the second nodes include 10 nodes. If the first node compares the set key of the target set with set keys of sets to which five nodes in the 10 nodes belong, and finds three nodes whose set keys are the same as that of the target set, the first node determines the three nodes as member nodes in the target set, and stops searching for the member node.

In the communication method shown in FIG. 9, the first node sends the first information that carries the first service type (that is, set connection invitation broadcast); then the plurality of second nodes (that is, the member nodes in the fixed set) receive the first information, and when determining that service types of the sets to which the second nodes belong are the same as the first service type, send connection requests to the first node; and then the first node may establish the connections to the plurality of second nodes, receive the set information of the at least one first set, and determine the target set in the at least one first set. In this way, efficiency of determining the target set by the first node can be effectively improved.

### Embodiment 4

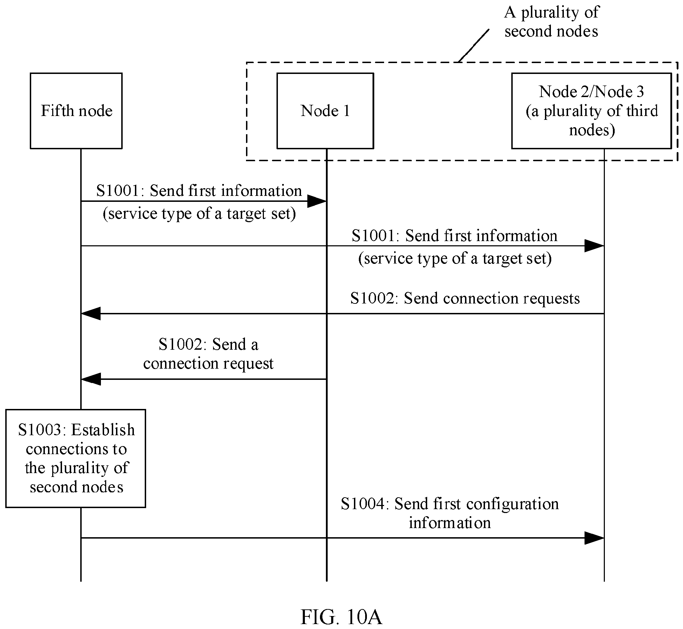

FIG. 10A is a schematic flowchart 1 of a fourth communication method according to an embodiment of this application. The method is applicable to a scenario in which no set is formed, and can implement flexible set configuration. The method includes the following steps.

S1001: A fifth node sends first information, where the first information indicates a service type of a target set. Correspondingly, one or more second nodes receive the first information.

S1002: If service types of the plurality of second nodes include the service type of the target set, the plurality of second nodes send connection requests to the fifth node, where the connection requests are used to request to establish connections to the fifth node. Correspondingly, the fifth node receives the plurality of connection requests.

S1003: The fifth node establishes the plurality of connections to the plurality of second nodes.

For example, the plurality of second nodes are a node 1, a node 2, and a node 3. The node 1, the node 2, and the node 3 all receive the first information from the fifth node, and service types of the node 1, the node 2, and the node 3 all include the service type of the target set. In this case, the node 1, the node 2, and the node 3 send a connection request to the fifth node separately. Correspondingly, the fifth node establishes a connection to the node 1, the node 2, and the node 3 separately.

S1004: The fifth node sends first configuration information to a plurality of third nodes in the plurality of second nodes, where the first configuration information indicates that the plurality of third nodes belong to the target set. Correspondingly, the plurality of third nodes receive the first configuration information.

It may be understood that the first configuration information indicates that the plurality of third nodes belong to the target set, and the plurality of third nodes may configure the plurality of third nodes as member nodes of the target set after receiving the first configuration information.

In the communication method shown in FIG. 10A, the fifth node (that is, a set configurator) sends the first information (set forming invitation broadcast), where the first information indicates the service type of the target set; and the plurality of second nodes (nodes that do not form sets) receive the first information, and when determining that the service types of the plurality of second nodes include the service type of the target set, establish the connections to the fifth node. In this way, a procedure in which the fifth node discovers a first node is effectively simplified, thereby improving efficiency of accessing the plurality of second nodes by the fifth node. In addition, the fifth node (that is, the set configurator) sends the first configuration information to the plurality of third nodes in the plurality of second nodes, and configures the plurality of third nodes as the member nodes in the target set, so that the set members in the target set can be flexibly configured.

Further, the first configuration information is further used to configure at least one of the following: the service type of the target set, a set key of the target set, a quantity of member nodes in the target set, or behavior information of a member node in the target set. Further, the plurality of third nodes receive the configuration information, and may configure the service type of the target set, the quantity of member nodes in the target set, the set key of the target set, or the behavior information of the member node in the target set. The behavior information of the member node in the target set indicates a behavior of the member node in the target set in receiving/sending broadcast information. Herein, the behavior information of the member node in the target set is behavior information of the plurality of third nodes.

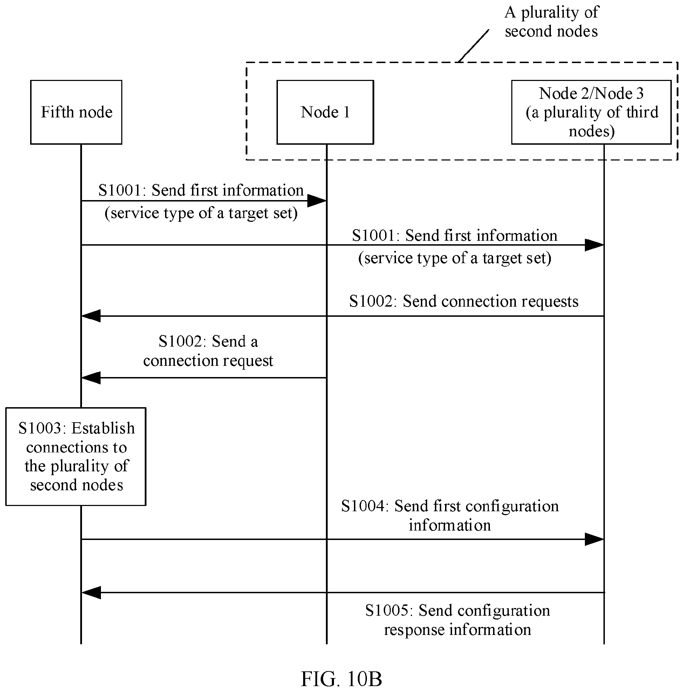

It may be understood that the first configuration information is set information used to configure the target set for the member node in the target set. Correspondingly, the set information of the target set may include at least one of the following: the service type of the target set, the set key of the target set, the quantity of member nodes in the target set, or the behavior information of the member node in the target set. Further, as shown in FIG. 10B, the fourth communication method further includes the following step.

S1005: The plurality of third nodes send a plurality of pieces of configuration response information to the fifth node, where the configuration response information indicates that a third node that sends the configuration response information has successfully configured the set information of the target set. Correspondingly, the fifth node receives the plurality of pieces of configuration response information.

In this way, the fifth node may learn of a case in which the plurality of third nodes configure the set information of the target set.

It should be understood that before sending the first configuration information to the plurality of third nodes, the fifth node needs to determine the plurality of third nodes from the plurality of second nodes. There are a plurality of implementations in which the fifth node determines the plurality of third nodes, including but not limited to the following cases:
Case 1: The fifth node may receive a user instruction, where the user instruction indicates identifiers of the plurality of third nodes that belong to the target set. In this case, the fifth node may determine the plurality of third nodes from the plurality of second nodes according to the user instruction.
   For example, the plurality of second nodes are the node 1, the node 2, and the node 3. If the user instruction received by the fifth node indicates identifiers corresponding to the node 2 and the node 3, the fifth node determines the node 2 and the node 3 as third nodes.
Case 2: The fifth node may determine the plurality of third nodes from the plurality of second nodes based on vendor information of the plurality of second nodes.

For example, the plurality of second nodes are the node 1, the node 2, and the node 3. A vendor of the node 1 is A, and vendors of the node 2 and the node 3 are B. In this case, the fifth node determines the node 2 and the node 3 as third nodes.

Further, after configuring the plurality of third nodes (that is, the node 2 and the node 3) in the plurality of second nodes as member nodes in the target set, the fifth node maintains connections between the fifth node and the plurality of third nodes, so that the fifth node and the member nodes in the target set can directly perform services.

It should be noted that, after the fifth node (that is, the set configurator) forms the target set, the fifth node may be converted into the member in the target set or a set user of the target set. The following describes different cases:
Case 1: The fifth node may be converted into the set user of the target set. In other words, the fifth node may be used as the set user of the target set.

In Case 1, the fifth node may maintain the connections to the plurality of third nodes, so that the fifth node and the plurality of third nodes (the member nodes in the target set) can directly perform services.

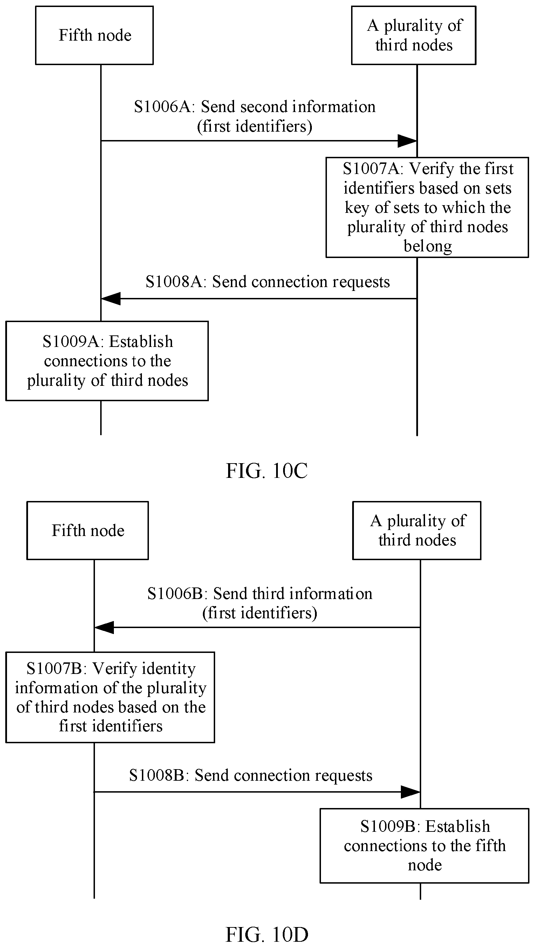

Further, in Case 1, after the connections between the fifth node and the plurality of third nodes are disconnected, the fifth node may further re-establish connections to the plurality of third nodes. There are a plurality of manners in which the fifth node re-establishes the connections to the plurality of third nodes, including but not limited to the following manners:
Implementation 1: The fifth node initiates an access procedure. As shown in FIG. 10C, the specific process includes the following steps.

S1006A: The fifth node sends second information, where the second information includes first identifiers. Correspondingly, the plurality of third nodes receive the second information.

The first identifiers are determined based on the set key of the target set. In a possible implementation, the fifth node may generate the first identifiers based on the set key of the target set and a hash algorithm.

S1007A: Each of the plurality of third nodes verifies a first identifier based on a set key of a set to which the third node belongs.

It may be understood that each of the plurality of third nodes verifies the first identifier based on the set key of the set to which the third node belongs. If each of the plurality of third nodes successfully verifies the first identifier, the third node determines that the set to which the third node belongs is the target set; or if each of the plurality of third nodes fails to verify the first identifier, the third node determines that the set to which the third node belongs is not the target set.

In a possible implementation, a process in which the plurality of third nodes verify the first identifier based on the set key of the target set may be: determining a hash value based on the set key of the set to which the third node belongs, the hash algorithm, and a random number part of the first identifier, and comparing the hash value with a hash value part of the first identifier. If the hash value is the same as the hash value part of the first identifier, the first identifier is successfully verified; or if the hash value is different from the hash value part of the first identifier, the first identifier fails to be verified.

S1008A: When successfully verifying the first identifier, each of the plurality of third nodes sends a connection request to the fifth node, where the connection request is used to request to establish a connection to the fifth node. Correspondingly, the fifth node receives the connection requests.

S1009A: The fifth node establishes the connections to the plurality of third nodes.

In Implementation 1 corresponding to Case 1, the fifth node is converted into the set user of the target set, and after the connections between the fifth node and the member nodes in the target set are disconnected, the fifth node sends the second information (that is, directed connection invitation broadcast) to the plurality of third nodes (the member nodes in the target set), thereby effectively simplifying a procedure of re-establishing the connections between fifth node and the member nodes in the target set.

Implementation 2: The plurality of third nodes in the target set initiate an access procedure. As shown in FIG. 10D, the process includes the following steps.

S1006B: The fifth node receives third information from the plurality of third nodes, where the third information includes first identifiers. Correspondingly, the plurality of third nodes send the plurality of pieces of third information.

A first identifier carried in third information sent by each of the plurality of third nodes is determined based on a set key of a set to which the third node belongs. In a possible implementation, each third node may generate, based on the set key of the set to which the third node belongs and the hash algorithm, the first identifier that is carried in the third information sent by the third node.

For example, the plurality of third nodes are the node 2 and the node 3. If a first identifier determined by the node 1 based on a set key of a set to which the node 1 belongs is an identifier 1, third information sent by the node 1 carries the identifier 1; or if a first identifier determined by the node 2 based on a set key of a set to which the node 2 belongs is an identifier 2, third information sent by the node 2 carries the identifier 2.

S1007B: The fifth node verifies identity information of the plurality of third nodes based on the first identifiers.

In this embodiment of this application, "the fifth node verifies identity information of the plurality of third nodes based on the first identifiers" may be understood as that the fifth node determines, based on the first identifiers, whether the plurality of third nodes belong to the target set.

In a possible implementation, a process in which the fifth node verifies the identity information of the plurality of third nodes based on the first identifiers may be: verifying the first identifiers based on the set key of the target set. If the fifth node successfully verifies the first identifiers based on the set key of the target set, the fifth node determines that the plurality of third nodes are the member nodes in the target set; or if the fifth node fails to verify the first identifiers based on the set key, the fifth node determines that the plurality of third nodes are not the member nodes in the target set.

In a possible implementation, a process in which the fifth node verifies the first identifiers based on the set key of the target set may be: determining a hash value based on the set key, the hash algorithm, and a random number part of the first identifier, and comparing the hash value with a hash value part of the first identifier. If the hash value is the same as the hash value part of the first identifier, the first identifier is successfully verified; or if the hash value is different from the hash value part of the first identifier, the first identifier fails to be verified.

S1008B: When determining that the plurality of third nodes are the member nodes in the target set, the fifth node sends connection requests to the plurality of third nodes, where the connection request is used to request to establish connections to the plurality of third nodes. Correspondingly, the third nodes receive the connection requests.

S1009B: The plurality of third nodes establish the connections to the fifth node.

In Implementation 2, the fifth node is converted into the set user of the target set, and after the connections between the fifth node and the member nodes in the target set are disconnected, the fifth node receives the third information (that is, set-formed broadcast) from the plurality of third nodes (the member nodes in the target set), to implement the reconnections between the fifth node and the plurality of third nodes. In other words, the plurality of third nodes initiate a connection procedure, so that power consumption and signaling overheads of the first node can be effectively reduced. In addition, the third information carries the first identifiers determined based on the set key of the target set, so that privacy of the plurality of third nodes (the member nodes in the target set) can be effectively protected.

Case 2: The fifth node may be converted into the member in the target set. In other words, the fifth node may be used as the member node in the target set.

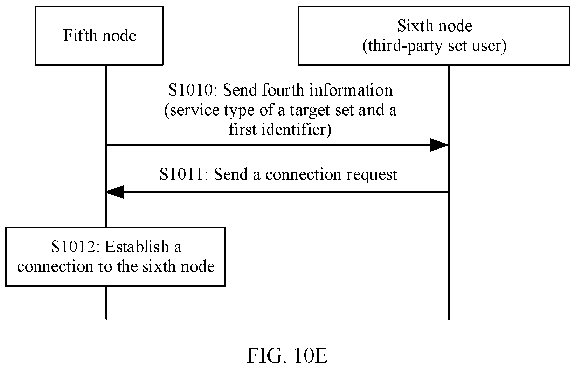

As shown in FIG. 10E, a process of establishing a connection between the fifth node and a sixth node (that is, a third-party set user) is as follows.

S1010: The fifth node sends fourth information, where the fourth information indicates that the target set has been configured. Correspondingly, the fifth node receives the fourth information.

In a possible implementation, the fourth information includes the service type of the target set and a first identifier. The first identifier is determined based on the set key of the target set.

In this way, the sixth node (that is, the third-party set user) may perceive the service type of the target set, and determine whether to access the target set. Further, if the member node in the target set can support a service of the sixth node, the sixth node performs S1011.

S1011: The sixth node sends a connection request to the fifth node, where the connection request is used to request to establish a connection to the fifth node. Correspondingly, the fifth node receives the connection request.

S1012: The fifth node establishes the connection to the sixth node.

In Case 2, after forming the target set, the fifth node (that is, the set configurator) may be converted into the member in the target set, and establish the connection to the sixth node (that is, the third-party set user).

It should be noted that after the fifth node forms the target set, the plurality of third nodes are configured as members in the target set. Therefore, the plurality of third nodes may also establish connections to the sixth node (that is, the third-party set user). A process of establishing the connections between the plurality of third nodes and the sixth node is similar to the process of establishing the connection between the fifth node and the sixth node shown in FIG. 10E, and only the fifth node needs to be replaced with the plurality of third nodes. For details, refer to the foregoing description. Details are not described herein again.

### Embodiment 5

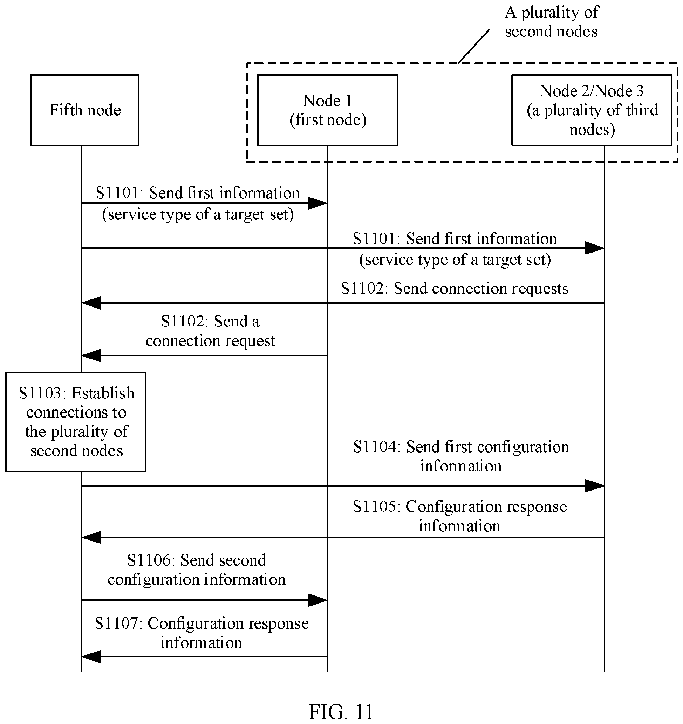

Different from Embodiment 4, in Embodiment 5, the fifth node (that is, the set configurator) may further configure the set user for the target set. In a possible implementation, the fifth node may configure the first node in the plurality of second nodes as the set user. Refer to FIG. 11. The fourth communication method includes the following steps.

S1101: The fifth node sends first information, where the first information indicates a service type of the target set. Correspondingly, the plurality of second nodes receive the first information.

S1102: If service types of the plurality of second nodes include the service type of the target set, the plurality of second nodes send connection requests to the fifth node, where the connection requests are used to request to establish connections to the fifth node. Correspondingly, the fifth node receives the plurality of connection requests.

S1103: The fifth node establishes the plurality of connections to the plurality of second nodes.

S1104: The fifth node sends first configuration information to a plurality of third nodes in the plurality of second nodes, where the first configuration information indicates that the plurality of third nodes belong to the target set. Correspondingly, the plurality of third nodes receive the first configuration information.

For a detailed description of the first configuration information, refer to the related description in Embodiment 4.

S1105: The plurality of third nodes send a plurality of pieces of configuration response information to the fifth node, where the configuration response information indicates that a third node that sends the configuration response information has successfully configured set information of the target set. Correspondingly, the fifth node receives the plurality of pieces of configuration response information.

For specific descriptions of S1101 to S1105, refer to the foregoing related descriptions of S1001 to S1005.

S1106: The fifth node sends second configuration information to the first node in the plurality of second nodes, where the second configuration information indicates that the first node is the set user of the target set. Correspondingly, the first node receives the second configuration information.

In a possible implementation, the fifth node receives a user instruction, and determines, according to the user instruction, the first node in the plurality of second nodes as the set user of the target set. For example, the plurality of second nodes are the node 1, the node 2, and the node 3. If the user instruction received by the fifth node instructs to configure the node 1 as the set user of the target set, the fifth node sends the second configuration information to the node 1.

In this embodiment of this application, the second configuration information is further used to configure at least one of the following: the service type of the target set, a set key of the target set, a quantity of member nodes in the target set, or behavior information of the set user in the target set. The behavior information of the set user indicates a behavior of the set user in receiving/sending broadcast information.

S1107: The first node sends configuration response information to the fifth node, where the configuration response information indicates that the first node has successfully configured the set information of the target set. Correspondingly, the fifth node receives the configuration response information.

It may be understood that the second configuration information is set information used to configure the target set for the set user of the target set. Correspondingly, the set information of the target set may include at least one of the following: the service type of the target set, the set key of the target set, the quantity of member nodes in the target set, or the behavior information of the set user of the target set. Therefore, the first node may perform S1107, so that the fifth node (that is, the set configurator) knows a configuration status of the first node.

It should be noted that a sequence of steps S1104 and S1105 and steps S1106 and S1107 is not limited in this embodiment of this application. FIG. 11 is merely a possible example.

In the embodiment shown in FIG. 11, the fifth node (that is, the set configurator) sends the first information (set forming invitation broadcast), where the first information indicates the service type of the target set; and the plurality of second nodes (nodes that do not form sets) receive the first information, and when determining that the service types of the plurality of second nodes include the service type of the target set, establish the connections to the fifth node. In this way, a procedure in which the fifth node discovers the first node is effectively simplified, thereby improving efficiency of accessing the plurality of second nodes by the fifth node. In addition, the fifth node (that is, the set configurator) may configure the first node in the plurality of second nodes (the nodes that do not form the sets) as the set user of the target set, so that the set user can directly access the member node in the target set without obtaining the set information of the target set subsequently, thereby effectively simplifying a procedure in which the set user discovers and accesses the member node in the target set.

It should be noted that, after being configured as the set user of the target set, the first node may establish the connection to the member node in the target set. For a specific connection manner, refer to the related description of establishing the connections between the first node and the third nodes in the foregoing second communication method. Details are not described herein again.

### Embodiment 6

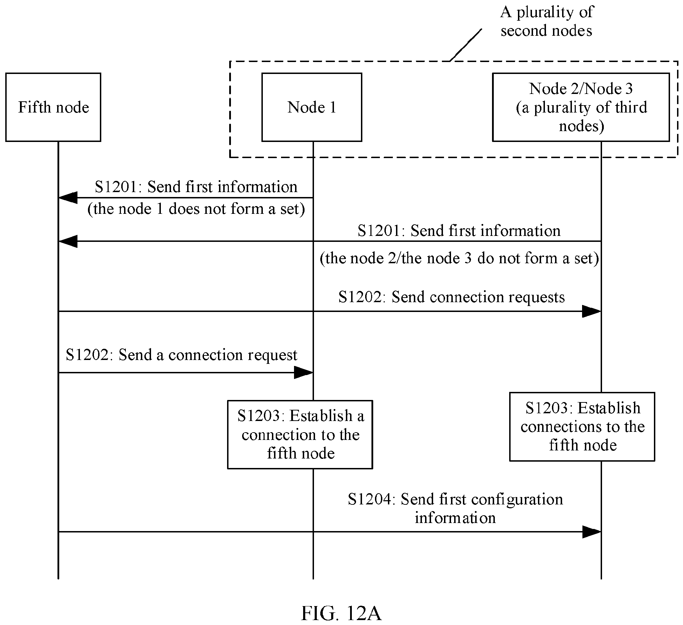

FIG. 12A is a schematic flowchart 1 of a fifth communication method according to an embodiment of this application. The method is applicable to a scenario in which no set is formed, and can implement flexible set configuration. The method includes the following steps.

S1201: A plurality of second nodes send first information, where each of the plurality of pieces of first information indicates that a second node corresponding to the first information does not form a set. Correspondingly, a fifth node sends the plurality of pieces of first information.

S1202: The fifth node sends a connection request to each of the plurality of second nodes, where the connection request is used to request to establish a connection to the second node. Correspondingly, the plurality of second nodes receive the connection requests.

S1203: The plurality of second nodes establish the connections to the fifth node.

For example, the plurality of second nodes are a node 1, a node 2, and a node 3. The node 1, the node 2, and the node 3 all send the first information. First information sent by the node 1 indicates that the node 1 does not form a set, first information sent by the node 2 indicates that the node 2 does not form a set, and first information sent by the node 3 indicates that the node 3 does not form a set. The fifth node sends connection requests to the node 1, the node 2, and the node 3, and the node 1, the node 2, and the node 3 establish connections to the fifth node separately.

S1204: The fifth node sends first configuration information to a plurality of third nodes in the plurality of second nodes, where the first configuration information indicates that the plurality of third nodes belong to the target set. Correspondingly, the plurality of third nodes receive the first configuration information.

For a detailed description of the first configuration information, refer to the related description in Embodiment 4.

In the communication method shown in FIG. 12A, the plurality of second nodes (nodes that do not form sets) send the first information (configurable set broadcast) to the fifth node, to indicate that the plurality of second nodes do not form the sets; and then the fifth node (that is, a set configurator) receives the first information, and establishes the connections to the plurality of second nodes. In this way, the plurality of second nodes send the first information, so that a procedure in which the fifth node discovers the plurality of second nodes is effectively simplified, and power consumption and signaling overheads of the fifth node are effectively reduced. In addition, the fifth node (that is, the set configurator) establishes the connections to the plurality of second nodes (that is, the nodes that do not form the sets), sends the first configuration information to the plurality of third nodes in the plurality of second nodes, and configures the plurality of third nodes as member nodes in the target set, so that the set members in the target set can be flexibly configured.

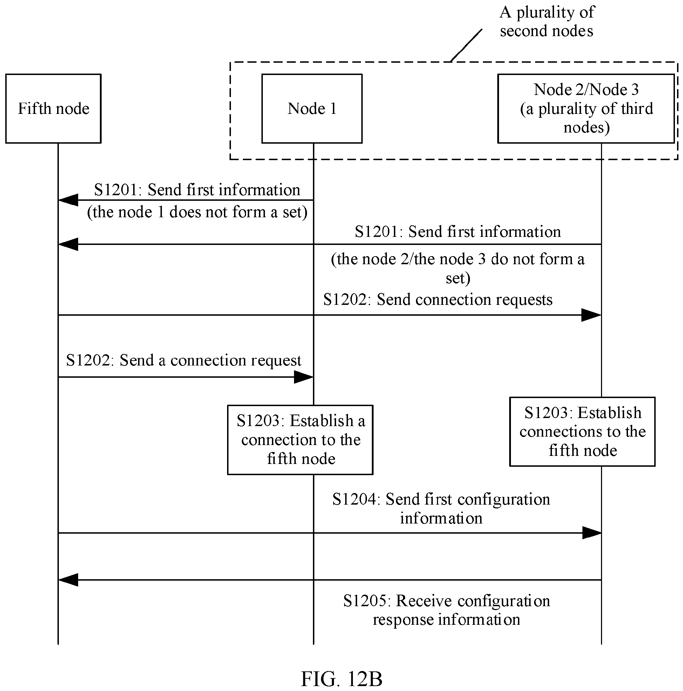

Further, as shown in FIG. 12B, the fifth communication method further includes the following step.

S1205: The plurality of third nodes send a plurality of pieces of configuration response information to the fifth node, where the configuration response information indicates that a third node that sends the configuration response information has successfully configured set information of the target set. Correspondingly, the fifth node receives the configuration response information.

In this way, in S1205, the fifth node may learn of a case in which the plurality of third nodes configure the set information of the target set.

It should be understood that before sending the first configuration information to the plurality of third nodes, the fifth node needs to determine the plurality of third nodes from the plurality of second nodes. For an implementation in which the fifth node determines the plurality of third nodes, refer to the related description in Embodiment 5.

In addition, after the fifth node (that is, the set configurator) forms the target set, the fifth node may be converted into the member in the target set or a set user of the target set. For a specific implementation, refer to the related description in Embodiment 5. Details are not described herein again.

### Embodiment 7

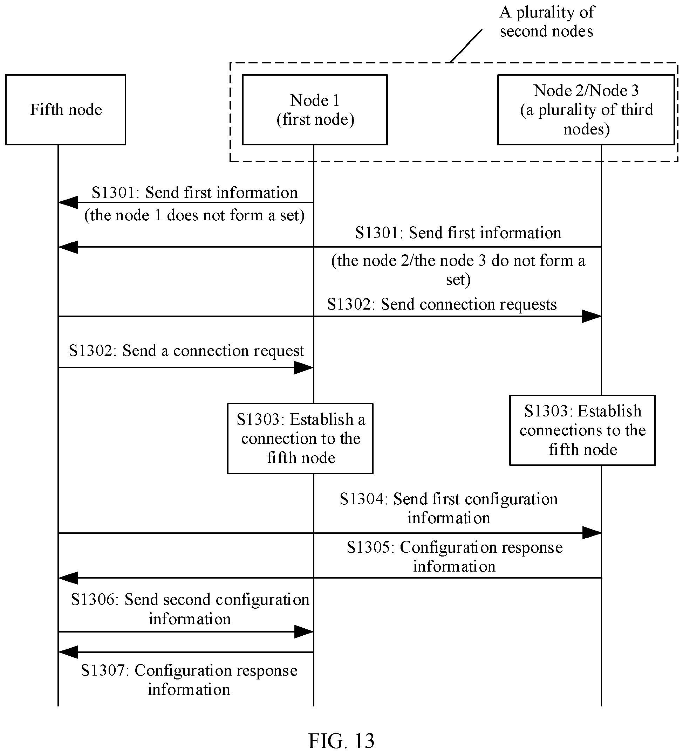

Different from Embodiment 6, in Embodiment 7, the fifth node (that is, the set configurator) may further configure the set user for the target set. In a possible implementation, the fifth node may configure the first node in the plurality of second nodes as the set user. Refer to FIG. 13. The fifth communication method includes the following steps.

S1301: The plurality of second nodes send first information, where each of the plurality of pieces of first information indicates that a second node corresponding to the first information does not form a set. Correspondingly, the fifth node sends the plurality of pieces of first information.

S1302: The fifth node sends a connection request to each of the plurality of second nodes, where the connection request is used to request to establish a connection to the second node. Correspondingly, the plurality of second nodes receive the connection requests.

S1303: The plurality of second nodes establish the connections to the fifth node.

S1304: The fifth node sends first configuration information to a plurality of third nodes in the plurality of second nodes, where the first configuration information indicates that the plurality of third nodes belong to the target set. Correspondingly, the plurality of third nodes receive the first configuration information.

For a detailed description of the first configuration information, refer to the related description in Embodiment 4.

S1305: The plurality of third nodes send a plurality of pieces of configuration response information to the fifth node, where the configuration response information indicates that a third node that sends the configuration response information has successfully configured set information of the target set. Correspondingly, the fifth node receives the configuration response information.

For specific descriptions of S1301 to S1305, refer to the foregoing related descriptions of S1201 to S1205.

S1306: The fifth node sends second configuration information to the first node in the plurality of second nodes, where the second configuration information indicates that the first node is the set user of the target set. Correspondingly, the first node receives the second configuration information.

It should be understood that the first node may be determined by the fifth node from the plurality of second nodes based on a user instruction. In a specific embodiment, there may be one or more embodiments. This is not limited in this embodiment of this application.

For a detailed description of the second configuration information, refer to the related description in Embodiment 5.

S1307: The first node sends configuration response information to the fifth node, where the configuration response information indicates that the first node has successfully configured the set information of the target set. Correspondingly, the fifth node receives the configuration response information.

It should be noted that a sequence of steps S1304 and S1305 and steps S1306 and S1307 is not limited in this embodiment of this application. FIG. 13 is merely a possible example.

In the embodiment shown in FIG. 13, the plurality of second nodes (nodes that do not form sets) send the first information (configurable set broadcast) to the fifth node, to indicate that the plurality of second nodes do not form the sets; and then the fifth node (that is, the set configurator) receives the first information, and establishes the connections to the plurality of second nodes. In this way, the plurality of second nodes send the first information, so that a procedure in which the fifth node discovers the plurality of second nodes is effectively simplified, and power consumption and signaling overheads of the fifth node are effectively reduced. In addition, the fifth node (that is, the set configurator) may configure the first node in the plurality of second nodes (the nodes that do not form the sets) as the set user of the target set, so that the set user can directly access the member node in the target set without obtaining the set information of the target set subsequently, thereby effectively simplifying a procedure in which the set user discovers and accesses the member node in the target set.

It should be noted that, after being configured as the set user of the target set, the first node may establish the connection to the member node in the target set. For a specific connection manner, refer to the related description of establishing the connections between the first node and the third nodes in the foregoing second communication method. Details are not described herein again.

The foregoing describes in detail the communication methods provided in embodiments of this application. The following describes in detail apparatuses provided in embodiments of this application with reference to specific accompanying drawings. It should be understood that descriptions of the apparatus embodiments correspond to the descriptions of the method embodiments. Therefore, for content that is not described in detail, refer to each other.

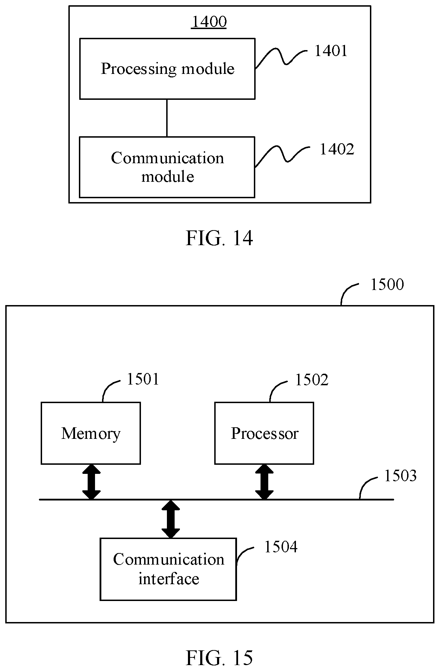

FIG. 14 is a block diagram of an apparatus 1400 according to an embodiment of this application. The apparatus 1400 is configured to implement a function of any one of the first node, the second node, the third node, the fourth node, the fifth node, or the sixth node in the foregoing method embodiments. For example, the apparatus may be a software module or a chip system. The chip may include a chip, or may include a chip and another discrete device. The apparatus 1400 includes a processing module 1401 and a communication module 1402. The communication module 1402 is configured to communicate with another device, and may also be referred to as a communication interface, a transceiver module, an input/output interface, or the like. The processing module 1401 is configured to perform a processing related operation in the foregoing method embodiment, and the communication module 1402 is configured to perform sending and receiving related operations in the foregoing method embodiment.

In this embodiment of this application, module division is an example, and is merely a logical function division. In actual implementation, another division manner may be used. In addition, functional modules in embodiments of this application may be integrated into one processor, or may exist alone physically, or two or more modules are integrated into one module. The integrated module may be implemented in a form of hardware, or may be implemented in a form of a software functional module.

FIG. 15 is a diagram of an apparatus 1500 according to an embodiment of this application. The apparatus 1500 may be a component of any one of a first node, a second node, a third node, a fourth node, a fifth node, or a sixth node, for example, a chip or an integrated circuit. The apparatus 1500 may include at least one processor 1502 and a communication interface 1504. Further, optionally, the apparatus may further include at least one memory 1501. Further, optionally, a bus 1503 may be further included. The memory 1501, the processor 1502, and the communication interface 1504 are connected through the bus 1503.

The memory 1501 is configured to provide storage space, and the storage space may store data such as an operating system and a computer program. The memory 1501 may be one or a combination of a random access memory (random access memory, RAM), a read-only memory (read-only memory, ROM), an erasable programmable read-only memory (erasable programmable read-only memory, EPROM), a portable read-only memory (compact disc read-only memory, CD-ROM), or the like.

The processor 1502 is a module for performing an arithmetic operation and/or a logical operation, and may be specifically one or a combination of a plurality of processing modules such as a central processing unit (central processing unit, CPU), a graphics processing unit (graphics processing unit, GPU), a microprocessor (microprocessor unit, MPU), an application-specific integrated circuit (application-specific integrated circuit, ASIC), a field programmable gate array (field programmable gate array, FPGA), a complex programmable logic device (complex programmable logic device, CPLD), a synergistic processing unit (assisting the central processing unit in completing corresponding processing and application), and a microcontroller unit (microcontroller unit, MCU).

The communication interface 1504 may be configured to provide an information input or output for the at least one processor; and/or the communication interface may be configured to receive data sent from the outside and/or send data to the outside, and may be a wired link interface including an Ethernet cable or the like, or may be a wireless link (Wi-Fi, Bluetooth, universal wireless transmission, a vehicle-mounted short-range communication technology, or the like) interface. Optionally, the communication interface 1504 may further include a transmitter (for example, a radio frequency transmitter or an antenna), a receiver, or the like coupled to the interface.

An embodiment of this application further provides a terminal. The terminal may be an intelligent cockpit device, a smart home device, an intelligent manufacturing device, a vehicle, or the like, and may be further applied to a wireless battery management system BMS. It may alternatively be understood that the "vehicle-mounted wireless short-range communication system" technology may be applied to a short-range communication system in the non-vehicle-mounted field. The terminal includes a first node and/or a second node, and the first node and the second node may be respectively the first node and the second node in embodiments shown in FIG. 3. The first node and the second node may be of a same type or different types. For example, in some embodiments, if the first node and the second node are of different types, the first node may be one or more of modules such as a camera, a screen, a microphone, a speaker, radar, an electronic key, a passive entry passive start system controller, and user equipment UE. The second node may be a base station, a vehicle cockpit domain controller (cockpit domain controller, CDC), or the like. Alternatively, in some embodiments, if the first node and the second node are of a same type, the first node and the second node each may be a base station, a CDC, or the like. Alternatively, the first node and the second node each may be one or more of modules such as a camera, a screen, a microphone, a speaker, radar, an electronic key, a passive entry passive start system controller, and user equipment UE. Optionally, the terminal may be an unmanned aerial vehicle, a robot, a device in a smart home scenario, a device in an intelligent manufacturing scenario, or the like.

Further, an embodiment of this application further provides an apparatus, including units configured to implement the foregoing embodiments. Alternatively, the apparatus includes a processor and an interface circuit. The processor is configured to communicate with another apparatus through the interface circuit, and perform the methods in the foregoing method embodiments. Alternatively, the apparatus includes a processor, configured to invoke a program stored in a memory, to perform the methods described in the foregoing embodiments.

An embodiment of this application further provides a computer-readable storage medium, including readable instructions. When the readable instructions are run on a computer, the computer is enabled to perform the methods described in the foregoing embodiments.

An embodiment of this application further provides a chip system. The chip system includes at least one processor and interface circuit. Further, optionally, the chip system may further include a memory or an external storage. The processor is configured to execute instructions and/or data interaction through the interface circuit, to implement the method in the foregoing method embodiment. The chip system may include a chip, or may include a chip and another discrete device.

An embodiment of this application further provides a computer program product, including instructions. When the instructions are run on a computer, the computer is enabled to perform the methods described in the foregoing embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, applied to a first node, wherein the method comprises:
receiving a plurality of pieces of first information from a plurality of second nodes, wherein each of the plurality of pieces of first information indicates a service type of a set to which a second node that sends the first information belongs;
determining a target set from sets to which the plurality of second nodes belong, wherein a service type of the target set corresponds to a first service of the first node;
sending a connection request, wherein the connection request is used to request to establish a connection to a third node, and the third node belongs to the target set; and
receiving information about the target set from the third node.

2. The method according to claim 1, wherein the first information further indicates a set identifier of the set to which the second node that sends the first information belongs, and the set identifier is determined based on a set key of the set to which the second node belongs.

3. The method according to claim 1 or 2, wherein the method further comprises:
sending read information to the third node, wherein the read information is used to request the information about the target set.

4. The method according to any one of claims 1 to 3, wherein the information about the target set comprises one or more of the following:
behavior information of a set user of the target set, behavior information of a member node in the target set, the service type of the target set, a quantity of member nodes in the target set, or a set key of the target set.

5. The method according to claim 4, wherein the behavior information of the set user indicates a behavior of the set user in receiving/sending broadcast information; and the behavior information of the member node in the target set indicates a behavior of the member node in the target set in receiving/sending broadcast information.

6. The method according to any one of claims 1 to 5, wherein the method further comprises:
sending second information, wherein the second information comprises a first identifier, and the first identifier is determined based on the set key of the target set;
receiving a connection request from a fourth node; and
establishing a connection to the fourth node, wherein
the fourth node is a node that is in the target set and that is different from the third node.

7. The method according to any one of claims 1 to 5, wherein the method further comprises:
receiving third information from a fourth node, wherein the third information comprises a first identifier;
verifying identity information of the fourth node based on the first identifier; and
when the verification succeeds, sending a connection request to the fourth node, wherein the connection request is used to request to establish a connection to the fourth node, and
the fourth node is a node that is in the target set and that is different from the third node.

8. The method according to claim 7, wherein the verifying identity information of the fourth node based on the first identifier comprises:
verifying the first identifier based on the set key of the target set.

9. A communication method, applied to a third node, wherein the third node belongs to a target set; and the method comprises:
receiving a connection request from a first node;
establishing a connection to the first node; and
sending information about the target set to the first node.

10. The method according to claim 9, wherein the sending information about the target set to the first node comprises:
receiving read information from the first node, wherein the read information is used to request the information about the target set; and
sending the information about the target set to the first node.

11. The method according to claim 9 or 10, wherein the information about the target set comprises one or more of the following:
behavior information of a set user of the target set, behavior information of a member node in the target set, a service type of the target set, a quantity of member nodes in the target set, or a set key of the target set.

12. The method according to any one of claims 9 to 11, wherein before the receiving a connection request from a first node, the method further comprises:
sending first information, wherein the first information indicates the service type of the set to which the third node belongs.

13. The method according to any one of claims 9 to 12, wherein the first information further indicates a set identifier of the set to which the third node belongs, and the set identifier is determined based on the set key of the set to which the third node belongs.

14. A communication method, applied to a fourth node, wherein the method comprises:
receiving second information from a first node, wherein the second information comprises a first identifier;
verifying the first identifier based on a set key of a set to which the fourth node belongs; and
when the verification succeeds, sending a connection request to the first node, wherein the connection request is used to request to establish a connection to the first node.

15. A communication method, applied to a first node, wherein the method comprises:
obtaining information about a target set by using an out-of-band OOB channel technology, wherein the information about the target set comprises a service type and a set key of the target set, and the service type corresponds to a first service of the first node; and
sending first information, wherein the first information comprises a first identifier, and the first identifier is determined based on the set key of the target set.

16. The method according to claim 15, wherein the method further comprises:
receiving a connection request from at least one third node; and
establishing a connection to the at least one third node, wherein
the at least one third node belongs to the target set.

17. The method according to claim 15, wherein the method further comprises:
receiving second information from at least one third node, wherein the second information comprises the first identifier;
verifying identity information of the at least one third node based on the first identifier; and
when the verification succeeds, sending a connection request to the at least one third node, wherein the connection request is used to request to establish a connection to the at least one third node.

18. The method according to claim 17, wherein the verifying identity information of the at least one third node based on the first identifier comprises:
verifying the first identifier based on the set key of the target set.

19. A communication method, applied to a third node, wherein the method comprises:
receiving first information from a first node, wherein the first information comprises a first identifier;
verifying the first identifier based on a set key of a set to which the third node belongs; and
when the verification succeeds, sending a connection request to the first node, wherein the connection request is used to request to establish a connection to the first node.

20. A communication method, applied to a first node, wherein the method comprises:
sending first information, wherein the first information indicates a first service type, and the first service type corresponds to a first service of the first node;
receiving a plurality of connection requests from a plurality of second nodes;
establishing a plurality of connections to the plurality of second nodes;
receiving set information of at least one first set, wherein the at least one set comprises sets to which the plurality of second nodes belong respectively; and
determining a target set from the at least one first set, wherein a service type of the target set corresponds to the first service.

21. The method according to claim 20, wherein the method further comprises:
sending read information to the plurality of second nodes, wherein the read information is used to request the set information of the at least one first set.

22. The method according to claim 20 or 21, wherein the set information comprises a quantity of member nodes in the set and a set key of the set; and
the method further comprises:
maintaining a connection between at least one third node and the first node based on a quantity of member nodes in the target set and a set key of the target set, wherein the at least one third node is a member node that is in the plurality of second nodes and that belongs to the target set.

23. The method according to any one of claims 20 to 22, wherein the target set is determined based on the quantity of member nodes in the set and/or a user instruction.

24. The method according to claim 22 or 23, wherein the maintaining a connection between at least one third node and the first node based on a quantity of member nodes in the target set and a set key of the target set comprises:
maintaining the connection between the at least one third node and the first node when the set key of the target set is the same as a set key of a set to which the at least one third node belongs.

25. A communication method, applied to a third node, wherein the method comprises:
receiving first information from a first node, wherein the first information indicates a first service type, the first service type corresponds to a first service of the first node, and the third node belongs to a first set;
if a service type of the first set is the same as the first service type, sending a connection request to the first node, wherein the connection request is used to request to establish a connection to the first node; and
sending set information of the first set to the first node.

26. The method according to claim 25, wherein the sending set information of the first set to the first node comprises:
receiving read information from the first node, wherein the read information is used to request the set information of the first set; and
sending the set information of the first set to the first node.

27. The method according to claim 25 or 26, wherein the set information comprises one or more of the following:
behavior information of a set user, behavior information of a member node in the set, a service type of the set, a quantity of member nodes in the set, or a set key of the set.

28. The method according to claim 27, wherein the behavior information of the set user indicates a behavior of the set user in receiving/sending broadcast information; and the behavior information of the member node indicates a behavior of the member node in receiving/sending broadcast information.

29. A communication method, applied to a fifth node, wherein the method comprises:
sending first information, wherein the first information indicates a service type of a target set; receiving a plurality of connection requests from a plurality of second nodes, and establishing a plurality of connections to the plurality of second nodes; and sending first configuration information to a plurality of third nodes in the plurality of second nodes, wherein the first configuration information indicates that the plurality of third nodes belong to the target set; or
receiving a plurality of pieces of first information from a plurality of second nodes, wherein each of the plurality of pieces of first information indicates that a second node corresponding to the first information does not form a set; sending a connection request to each of the plurality of second nodes, wherein the connection request is used to request to establish a connection to the second node; and sending first configuration information to a plurality of third nodes in the plurality of second nodes, wherein the first configuration information indicates that the plurality of third nodes belong to a target set.

30. The method according to claim 29, wherein the first configuration information is further used to configure at least one of the following:
the service type of the target set, a set key of the target set, a quantity of member nodes in the target set, or behavior information of a member node in the target set.

31. The method according to claim 30, wherein the behavior information of the member node indicates a behavior of the member node in receiving/sending broadcast information.

32. The method according to any one of claims 29 to 31, wherein the plurality of third nodes are determined according to a user instruction.

33. The method according to any one of claims 29 to 32, wherein the method further comprises:
receiving a plurality of pieces of configuration response information from the plurality of third nodes, wherein each of the plurality of pieces of configuration response information indicates that a third node that sends the configuration response information has successfully configured set information of the target set.

34. The method according to any one of claims 29 to 33, wherein the method further comprises:
receiving the user instruction, wherein the user instruction is used to determine a first node in the plurality of second nodes as a set user of the target set; and
sending second configuration information to the first node, wherein the second configuration information indicates that the first node is the set user of the target set, and the service type of the target set corresponds to a first service of the first node.

35. The method according to claim 34, wherein the second configuration information is further used to configure at least one of the following:
the service type of the target set, the set key of the target set, the quantity of member nodes in the target set, or behavior information of the set user in the target set.

36. The method according to claim 35, wherein the behavior information of the set user indicates a behavior of the set user in receiving/sending broadcast information.

37. The method according to any one of claims 34 to 36, wherein the method further comprises:
receiving configuration response information from the first node, wherein the configuration response information indicates that the first node has successfully configured the set information of the target set.

38. The method according to any one of claims 29 to 37, wherein the method further comprises:
sending fourth information, wherein the fourth information indicates that the target set has been configured;
receiving a connection request from a sixth node, wherein the connection request is used to request to establish a connection to the fifth node, and the sixth node is a node outside the target set; and
establishing a connection to the sixth node.

39. The method according to claim 38, wherein the fourth information comprises the service type and a first identifier of the target set, and the first identifier is determined based on the set key of the target set.

40. The method according to any one of claims 29 to 33, wherein the method further comprises:
maintaining connections to the plurality of third nodes.

41. The method according to any one of claims 29 to 33 and 40, wherein after the connections between the fifth node and the plurality of third nodes are disconnected, the method further comprises:
sending second information, wherein the second information comprises first identifiers, and the first identifiers are determined based on the set key of the target set; and
receiving connection requests from the plurality of third nodes; and establishing the connections to the plurality of third nodes.

42. The method according to any one of claims 29 to 33 and 40, wherein after the connections between the fifth node and the plurality of third nodes are disconnected, the method further comprises:
receiving third information from the plurality of third nodes, wherein the third information comprises first identifiers;
verifying identity information of the plurality of third nodes based on the first identifiers; and
when the verification succeeds, sending connection requests to the plurality of third nodes, wherein the connection requests are used to request to establish the connections to the plurality of third nodes.

43. The method according to claim 42, wherein the verifying identity information of the plurality of third nodes based on the first identifiers comprises:
verifying the first identifiers based on the set key of the target set.

44. A communication method, applied to a first node, wherein the method comprises:
receiving first information from a fifth node, wherein the first information indicates a service type of a target set; when determining that the service type of the target set corresponds to a first service of the first node, sending a connection request to the fifth node, wherein the connection request is used to request to establish a connection to the fifth node; and receiving second configuration information from the fifth node, wherein the second configuration information indicates that the first node is a set user of the target set; or
sending first information, wherein the first information indicates that the first node does not form a set; receiving a connection request from a fifth node; establishing a connection to the fifth node; and receiving second configuration information from the fifth node, wherein the second configuration information indicates that the first node is a set user of a target set.

45. The method according to claim 44, wherein the first configuration information is further used to configure at least one of the following:
the service type of the target set, a set key of the target set, a quantity of member nodes in the target set, or behavior information of the set user in the target set.

46. The method according to claim 45, wherein the behavior information of the set user indicates a behavior of the set user in receiving/sending broadcast information.

47. A communication method, applied to a third node, wherein the method comprises:
receiving first information from a fifth node, wherein the first information indicates a service type of a target set; when determining that a service type of the third node comprises the service type of the target set, sending a connection request to the fifth node, wherein the connection request is used to request to establish a connection to the fifth node; and receiving first configuration information from the fifth node, wherein the first configuration information indicates that the third node belongs to the target set; or
sending first information, wherein the first information indicates that the third node does not form a set; receiving a connection request from a fifth node, and establishing a connection to the fifth node; and receiving first configuration information from the fifth node, wherein the first configuration information indicates that the third node belongs to a target set.

48. The method according to claim 47, wherein the first configuration information is further used to configure at least one of the following:
the service type of the target set, a set key of the target set, a quantity of member nodes in the target set, or behavior information of a member node in the target set.

49. The method according to claim 48, wherein the behavior information of the member node indicates a behavior of the member node in receiving/sending broadcast information.

50. The method according to any one of claims 47 to 49, wherein the method further comprises:
sending configuration response information to the fifth node, wherein the configuration response information indicates that the third node has successfully configured set information of the target set.

51. The method according to any one of claims to 47 to 50, wherein after connections between the fifth node and a plurality of third nodes are disconnected, the method further comprises:
receiving second information from the fifth node, wherein the second information comprises first identifiers;
verifying the first identifiers based on set keys of sets to which the third nodes belong; and
when the verification succeeds, sending connection requests to the fifth node, wherein the connection requests are used to request to establish connections to the fifth node.

52. The method according to any one of claims to 47 to 50, wherein after connections between the fifth node and a plurality of third nodes are disconnected, the method further comprises:
sending third information, wherein the third information comprises first identifiers, and the first identifiers are determined based on the set key of the target set;
receiving connections request from the fifth node; and
establishing connections to the fifth node.

53. The method according to any one of claims 47 to 52, wherein the method further comprises:
sending fourth information, wherein the fourth information indicates that the target set has been configured;
receiving a connection request from a sixth node, wherein the connection request is used to request to establish a connection to the third node, and the sixth node is a node outside the target set; and
establishing a connection to the sixth node.

54. The method according to claim 53, wherein the fourth information comprises the service type and a first identifier of the target set, and the first identifier is determined based on the set key of the target set.

55. A communication apparatus, comprising at least one processor and an interface circuit, wherein the interface circuit is configured to provide information input and/or information output for the at least one processor, and the at least one processor implements the method according to any one of claims 1 to 54 through a logic circuit or by executing code instructions.

56. A computer-readable storage medium, wherein the storage medium stores a computer program or instructions, and when the computer program or the instructions are executed by a communication apparatus, the method according to any one of claims 1 to 54 is implemented.
